(19) Europäisches Patentamt / European Patent Office / Office européen des brevets

(11) **EP 2 795 831 B1**

(12) **FASCICULE DE BREVET EUROPEEN**

(45) Date de publication et mention de la délivrance du brevet:
**09.03.2016 Bulletin 2016/10**

(21) Numéro de dépôt: **12812641.4**

(22) Date de dépôt: **20.12.2012**

(51) Int Cl.:
*H04L 9/32* (2006.01)   *H04L 9/00* (2006.01)

(86) Numéro de dépôt international:
**PCT/EP2012/076492**

(87) Numéro de publication internationale:
**WO 2013/092916 (27.06.2013 Gazette 2013/26)**

(54) **IDENTIFICATION BIOMETRIQUE UTILISANT DES FILTRES ET PAR CALCUL MULTI PARTIESECURISE**

BIOMETRISCHE IDENTIFIKATION DURCH FILTERUNG UND SICHERE MEHRPARTEIEN-BERECHNUNG

BIOMETRIC IDENTIFICATION USING FILTERING AND SECURE MULTI PARTY COMPUTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2011 FR 1162058**

(43) Date de publication de la demande:
**29.10.2014 Bulletin 2014/44**

(73) Titulaire: **Morpho**
**92130 Issy-les-Moulineaux (FR)**

(72) Inventeurs:
  • **PATEY, Alain**
    **F-92130 Issy-les-Moulineaux (FR)**
  • **CHABANNE, Hervé**
    **F-92130 Issy-les-Moulineaux (FR)**
  • **BRINGER, Julien**
    **F-92130 Issy-les-Moulineaux (FR)**
  • **FAVRE, Mélanie**
    **F-92130 Issy-les-Moulineaux (FR)**

(74) Mandataire: **Regimbeau**
**20, rue de Chazelles**
**75847 Paris Cedex 17 (FR)**

(56) Documents cités:
**FR-A1- 2 957 168**

• JULIEN BRINGER ET AL: "Faster secure computation for biometric identification using filtering", BIOMETRICS (ICB), 2012 5TH IAPR INTERNATIONAL CONFERENCE ON, IEEE, 29 mars 2012 (2012-03-29), pages 257-264, XP032215584, DOI: 10.1109/ICB.2012.6199817 ISBN: 978-1-4673-0396-5
• JULIEN BRINGER ET AL: "Extended Private Information Retrieval and Its Application in Biometrics Authentications", 8 décembre 2007 (2007-12-08), CRYPTOLOGY AND NETWORK SECURITY; [LECTURE NOTES IN COMPUTER SCIENCE], SPRINGER BERLIN HEIDELBERG, BERLIN, HEIDELBERG, PAGE(S) 175 - 193, XP019083964, ISBN: 978-3-540-76968-2 alinéa [0002] - alinéa [0005]
• MARINA BLANTON ET AL: "Secure and Efficient Protocols for Iris and Fingerprint Identification", INTERNATIONAL ASSOCIATION FOR CRYPTOLOGIC RESEARCH,, vol. 20110917:024955, 17 septembre 2011 (2011-09-17), pages 1-25, XP061004601,
• Bringer Julien ET AL: "Identification with Encrypted Biometric Data", , 7 septembre 2009 (2009-09-07), XP055047128, Extrait de l'Internet: URL:http://arxiv.org/pdf/0901.1062v2.pdf [extrait le 2012-12-07]
• AHMAD-REZA SADEGHI ET AL: "Efficient Privacy-Preserving Face Recognition", 2 décembre 2009 (2009-12-02), INFORMATION, SECURITY AND CRYPTOLOGY Â ICISC 2009, SPRINGER BERLIN HEIDELBERG, BERLIN, HEIDELBERG, PAGE(S) 229 - 244, XP019147094, ISBN: 978-3-642-14422-6 alinéa [0003]

- ZHIHONG ZENG ET AL: "Local Feature Hashing for face recognition", BIOMETRICS: THEORY, APPLICATIONS, AND SYSTEMS, 2009. BTAS '09. IEEE 3RD INTERNATIONAL CONFERENCE ON, IEEE, PISCATAWAY, NJ, USA, 28 septembre 2009 (2009-09-28), pages 1-8, XP031570247, ISBN: 978-1-4244-5019-0

- YAN HUANG ET AL: "Efficient Secure Computation with Garbled Circuits", 1 janvier 2011 (2011-01-01), INFORMATION SYSTEMS SECURITY, SPRINGER BERLIN HEIDELBERG, BERLIN, HEIDELBERG, PAGE(S) 28 - 48, XP019169391, ISBN: 978-3-642-25559-5 alinéa [0002] page 3.4

**Description**

DOMAINE DE L'INVENTION

La présente invention concerne de manière générale l'identification d'individus ou d'objets, l'identification étant réalisée par comparaison d'une donnée d'un individu ou d'un objet que l'on souhaite identifier à un ensemble de données de même nature d'individus ou d'objets répertoriés, ces données étant stockées dans une base.

L'invention s'applique notamment à l'identification biométrique d'un individu, dans laquelle les données comparées de l'individu et de la base de données sont des informations biométriques relatives par exemple à l'iris, à l'empreinte digitale, ou encore à la forme du visage du porteur.

ETAT DE LA TECHNIQUE

De nombreuses techniques d'identification sont déjà connues. Généralement, elles sont mises en oeuvre conjointement par un serveur de contrôle d'un individu ou d'un objet, qui peut procéder à l'acquisition d'une donnée d'un individu ou d'un objet, et par un serveur d'une base comprenant N données de même nature.

La donnée de l'individu ou de l'objet, acquise par le serveur de contrôle, est comparée à l'ensemble des données de la base afin d'identifier si au moins une donnée de la base correspond à la donnée acquise, et ainsi identifier l'individu ou l'objet comme un individu ou un objet répertorié dans la base.

Il existe deux problématiques majeures dans ce domaine, particulièrement dans le cas de l'identification biométrique d'individus.

La première est liée à la sécurité et à la confidentialité du processus d'identification : en effet, la base de données biométriques comporte des informations privées, et le serveur de contrôle ne doit pas avoir accès à ces informations de la base. De même, le serveur de gestion de la base de données ne doit pas récupérer d'informations sur l'individu à identifier, en particulier la donnée biométrique de l'individu à identifier.

Pour répondre à cette problématique, des systèmes de calcul sécurisé ont été développés. On connaît en particulier le calcul sécurisé multipartite, (connu sous l'acronyme anglais SMC pour Secure Multi-Party Computation), qui consiste à réaliser un calcul entre plusieurs participants détenant chacun une ou plusieurs entrées d'une fonction à calculer, de sorte que les participants apprennent à l'issue du calcul uniquement le résultat du calcul.

De tels systèmes sont par exemple proposés dans les publications suivantes :

- Z. Erkin, M. Franz, J. Guajardo, S. Katzenbeisser, I. Lagendijk, and T. Toft. Privacy-preserving face récognition. In Privacy Enhancing Technologies, 2009.

- A. C.-C. Yao. How to generate and exchange secrets (extended abstract). In FOCS, 1986.
- A.-R. Sadeghi, T. Schneider, and I. Wehrenberg. Efficient privacy-preserving face récognition. In ICISC, 2009.

Le second article décrit une méthode de calcul sécurisé appelée « protocole de Yao ». Cette méthode est explicitée dans la suite. Le dernier article présente une méthode mettant en oeuvre ce protocole de Yao dans le contexte de l'identification biométrique.

Ces méthodes permettent d'assurer aux calculs de fonctions de comparaison une sécurité importante. En revanche, elles ne permettent pas de répondre à la deuxième problématique majeure : la minimisation du temps et de la capacité de calcul.

En effet, le calcul sécurisé appliqué N fois sur une donnée biométrique complète est très coûteux en temps de calcul et en quantité de données échangées.

Il existe donc un besoin pour identifier un individu à partir d'une donnée biométrique de façon sécurisée, et de façon plus rapide et moins coûteuse en capacité de calcul que dans les solutions déjà proposées.

Le document J. Bringer et al. Extended Private Information Retrieval and Its Application in Biometrics Authentications, In Cryptology and Network Security, Springer Berlin Heidelberg, 08.12.2007 décrit un protocole appelé EPIR et son application au calcul d'une distance de Hamming.

Le document M. Blanton et al. Secure and Efficient Protocols for Iris and Fingerprint Identification, In International association for cryptologic research, vol. 20110917, pages 1-25, 17.09.2011, décrit l'utilisation de circuits confus et de transferts inconscients pour réaliser l'identification sécurisée d'un individu.

PRESENTATION DE L'INVENTION

L'invention propose à cet égard un procédé d'identification sécurisé d'un individu ou d'un objet, par comparaison avec des données d'une base de données, qui comprend une première phase de filtrage rapide et sécurisé pour identifier les données de la base présentant le plus de similarité avec la donnée de l'individu ou de l'objet, et une deuxième étape de calcul sécurisé permettant d'identifier la ou les données présentant un taux de similarité avec la donnée de l'individu ou de l'objet qui dépasse un seuil prédéterminé.

La première étape, de filtrage rapide et sécurisé, permet de raccourcir considérablement le temps de calcul car les opérations sont réalisées sur des données de taille réduites par rapport aux données originales. La seconde étape, de calcul sécurisé, n'est menée que sur les données sélectionnées, et comporte donc un nombre d'opérations de calcul inférieur à la taille de la base de données originale (N).

La présente demande a pour objet un procédé d'identification d'un individu ou d'un objet, dans un système comprenant un serveur de contrôle, adapté pour acquérir une donnée de l'individu ou de l'objet à identifier, et un serveur de gestion d'une base de données comprenant N données de référence indexées de N individus répertoriés,

dans lequel, pour identifier l'individu ou l'objet, on compare sa donnée avec chacune des N données de la base, afin de déterminer si la donnée de l'individu ou l'objet à identifier correspond à l'une des N données de référence des N individus répertoriés Le procédé comprend des étapes au cours desquelles:

- le serveur de contrôle acquiert la donnée de l'individu ou l'objet à identifier,
- on convertit les données de références de la base et la donnée de l'individu ou l'objet à identifier en données simplifiées de moindre taille,
- on détermine, de façon sécurisée entre chacune des N données simplifiées de la base de données et la donnée simplifiée de l'individu ou l'objet à identifier, un ensemble de p index de données simplifiées de la base, p étant inférieur à N, présentant le plus de similarités avec la donnée simplifiée de l'individu ou l'objet à identifier,
- le serveur de gestion brouille les N données de référence de la base de données, et transfère au serveur de contrôle p données brouillées correspondant aux données simplifiées identifiées précédemment,
- à partir des p données brouillées, le serveur de contrôle détermine, par calcul sécurisé multipartite entre chacune des p données brouillées et la donnée de l'individu ou l'objet, le ou les index d'une ou plusieurs données brouillées dont les données de référence correspondantes présentent un taux de similarité avec la donnée de l'individu ou l'objet qui excède un seuil prédéterminé.

Avantageusement, mais facultativement, le procédé selon l'invention comprend en outre au moins l'une des caractéristiques suivantes :

- Le transfert des p données brouillées depuis le serveur de gestion vers le serveur de contrôle met en oeuvre une technique de transfert inconscient.
- Au cours du procédé, après que le serveur de contrôle a déterminé le ou les index des données brouillées dont les données de référence correspondantes présentent un taux de similarité avec la donnée de l'individu ou de l'objet qui excède un seuil prédéterminé, le serveur de contrôle communique ledit index au serveur de gestion, et à partir du ou des index, le serveur de gestion détermine la ou les données de référence de la base correspondant audit ou auxdits index, et identifie l'individu ou l'objet comme un individu ou un objet répertorié dans la base possédant la donnée de référence correspondant à ou aux index.
- Pour brouiller les N données de la base, le serveur de gestion génère, pour chacune des p données de référence correspondant aux données simplifiées sélectionnées, une base de données brouillée correspondante comprenant N données brouillées pour lesquelles, pour chaque position possible d'un bit dans la représentation binaire des données correspondantes, une permutation aléatoire, est appliquée au bit de ladite position.

- L'identification porte sur un individu, et les données de références de la base et la donnée de l'individu à identifier sont des données biométriques.
- Les données biométriques sont des codes binaires d'images d'iris.
- Chaque donnée comprend un ensemble de bits indexés, et, au cours de l'étape de conversion des données en données simplifiées, on définit un ensemble d'indexation comprenant des numéros d'indexation des bits des données, et on convertit les données en ne conservant pour les données simplifiées que les bits indexés par les numéros de l'ensemble d'indexation, lesdits numéros d'indexation étant choisis pour concerner les bits les plus pertinents.
- La détermination des données simplifiées de la base présentant le plus de similarités avec la donnée simplifiée de l'individu ou de l'objet est réalisée par calcul de distances de Hamming entre les données simplifiées de la base et la donnée simplifiée de l'individu.
- L'étape de détermination des N données simplifiées de la base présentant le plus de similarités avec la donnée simplifiée de l'individu à identifier est mise en oeuvre par calcul multipartite sécurisé.
- Au cours de l'étape de calcul multipartite sécurisé entre les données brouillées de la base et la donnée de l'individu, on calcule un taux de similarité entre chaque donnée de la base correspondante à chaque donnée brouillée et la donnée de l'individu, on compare les taux de similarité obtenus au seuil prédéterminé, pour sélectionner le ou les index de la ou les données de la base présentant un taux de similarité excédant ledit seuil.
- Chaque étape de calcul multipartite sécurisé comprend les sous-étapes suivantes :

  o le serveur de gestion génère au moins un circuit confus de calcul d'une fonction à évaluer,

chaque circuit confus ayant pour entrées un ensemble de clés de chiffrement de bits de données d'entrée de la fonction à évaluer et pour sortie les clés de chiffrement correspondant aux bits du résultat de la fonction évaluée, et comprenant les étapes de calcul de la fonction décomposées sous forme d'opérations logiques élémentaires, et un ensemble de clés de codage de chacune des entrées et sorties possibles de chaque opération logique élémentaire,

  o le serveur de gestion génère aléatoirement lesdites clés de codage,

o le serveur de gestion communique au serveur de contrôle, en mettant en oeuvre une technique de transfert inconscient, pour chaque circuit confus, des clés de codages correspondant aux valeurs des bits des entrées de la fonction à évaluer, et une table de décodage de la sortie de chaque circuit confus ou d'une ou plusieurs sorties d'une opération logique de celui-ci, et

o à partir des clés obtenues, le serveur de contrôle évalue chaque circuit confus en utilisant comme entrée les clés obtenues.

- Pour calculer et comparer les taux de similarité entre les données correspondant aux données brouillées et la donnée de l'individu, un calcul sécurisé multipartite est mis en oeuvre, dans lequel le serveur de gestion génère pour chacune des données de la base sélectionnées un circuit confus correspondant,

o les entrées de chaque circuit confus étant des clés de chiffrement de la donnée brouillée correspondante et celles de la donnée de l'individu, o la fonction à évaluer de chaque circuit confus étant le calcul du taux de similarité entre la donnée de la base correspondante et la donnée de l'individu, et la comparaison du taux de similarité avec le seuil prédéterminé, et o la sortie de chaque circuit étant le résultat de la comparaison du taux de similarité avec le seuil prédéterminé,

dans lequel le serveur de gestion génère et transfère au serveur de contrôle, pour chaque circuit confus, des clés de codage brouillées correspondant aux valeurs possibles des bits de la donnée brouillée et des clés de codage correspondant aux valeurs possibles des bits de la donnée de l'individu, et transfère au serveur de contrôle les valeurs des bits de la donnée brouillée, et dans lequel les transferts des valeurs des bits de la donnée brouillée et des clés de codage correspondantes mettent en oeuvre une méthode de transfert inconscient.

- La fonction à évaluer de chaque circuit confus comprend le calcul de la distance de Hamming normalisée entre chaque donnée correspondant à la donnée brouillée et la donnée de l'individu.
- La génération des clés de codage brouillées d'une donnée brouillée est réalisée en appliquant à des clés de codage générées aléatoirement pour chaque bit de la donnée correspondante de la base, une réindexation suivant la même permutation que celle appliquée audit bit de la donnée pour obtenir la donnée brouillée.
- Pour sélectionner les p données simplifiées de la base présentant le plus de similarités avec la donnée simplifiée de l'individu à identifier, on met en oeuvre une méthode de calcul sécurisé multipartite dans lequel le serveur de gestion génère un circuit confus,

o le circuit confus ayant pour entrées l'ensemble des clés de chiffrements des bits des données simplifiées de la base et celles de la donnée simplifiée de l'individu, o la fonction à évaluer étant le calcul des taux de similarités entre les données simplifiées de la base et la donnée simplifiée de l'individu suivi d'une étape de recherche des p données simplifiées de la base présentant le plus de similarités avec la donnée simplifiée de l'individu, l'évaluation du circuit permettant de retrouver les index des données simplifiées présentant le plus de similarités avec la donnée simplifiée de l'individu.

- Le procédé comprend une étape préliminaire au cours de laquelle les données de la base sont réindexées de manière aléatoire par le serveur de gestion.

L'invention concerne en outre un système d'identification d'un individu, comportant au moins un serveur de contrôle d'un individu à identifier, et au moins un serveur de gestion d'une base de N données de référence d'individus répertoriés, le serveur de contrôle étant adapté pour procéder à l'acquisition d'une donnée de l'individu, et dans lequel le serveur de contrôle et le serveur de gestion comportent des moyens de traitement adaptés pour

o réaliser un filtrage sécurisé de p données parmi un ensemble de N données de référence de la base présentant le plus de similarités avec la donnée de l'individu à identifier, et o par calcul sécurisé, identifier la ou les données présentant des similarités avec la donnée de l'individu à identifier excédant un seuil prédéterminé,

sans que le serveur de contrôle n'obtienne d'informations sur les données de référence stockées dans la base de données, ni que le serveur de gestion n'obtienne d'informations sur la donnée de l'individu à identifier.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente schématiquement un système adapté pour mettre en oeuvre le procédé selon l'invention
- La figure 2 représente les principales étapes d'un exemple de mise en oeuvre de l'invention.

- La figure 3a illustre un circuit confus du type employé dans le procédé selon l'invention, sur l'exemple d'une fonction logique « ET » à évaluer,
- Les figures 3b à 3e illustrent la façon dont sont cryptées des tables de vérité d'un circuit confus sur l'exemple de la table de vérité de la fonction logique « ET »,
- La figure 4 illustre un exemple de fonction de comparaison mise en oeuvre dans l'étape de filtrage rapide.
- La figure 5 représente un exemple de mise en oeuvre de l'étape de filtrage rapide,
- La figure 6 représente la mise en oeuvre de l'étape de comparaison et de sélection de données préalablement filtrées.

## DESCRIPTION DETAILLEE D'AU MOINS UN EXEMPLE DE MISE EN OEUVRE

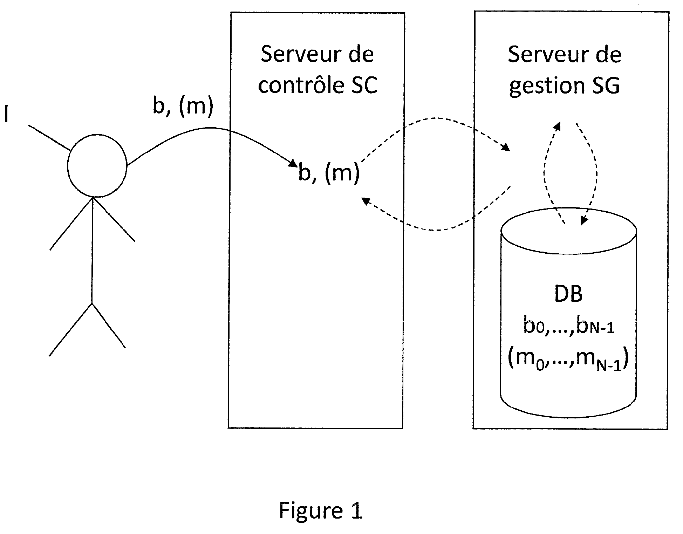

En référence à la figure 1, est représenté schématiquement un exemple de mise en oeuvre d'une identification d'un individu I ou d'un objet. Cette identification peut par exemple être un contrôle d'accès à un lieu sécurisé. On prendra dans la suite l'exemple non limitatif de l'identification biométrique d'un individu.

Une base de données DB comprend un ensemble de N données biométriques indexées $b_i$, i étant compris entre 0 et N-1, d'individus répertoriés comme étant par exemple autorisés à pénétrer dans un lieu, ou au contraire dont la présence est interdite dans ce lieu.

Cette base de données DB est associée à un serveur de gestion SG, qui est doté de moyens de calculs mis en oeuvre par un programme informatique approprié.

L'individu I s'identifie auprès d'un serveur de contrôle SC, qui est également doté de moyens de calculs mis en oeuvre par un programme informatique approprié, et comprend en outre des moyens d'acquisition et de traitement d'une donnée propre à l'individu, notamment une donnée biométrique b.

La donnée b peut provenir de manière connue d'une image numérisée et encodée d'un caractère biométrique tel que le visage, ou une empreinte digitale, ou encore l'iris de l'individu, ou une combinaison de plusieurs de ces données. A titre d'exemple non limitatif, on prendra par la suite le cas d'une acquisition numérique de l'iris de l'individu I.

La donnée b peut également être stockée sous forme numérique dans un document d'identité de l'individu.

La donnée b de l'individu et les données $b_0$ à $b_{N-1}$ de la base doivent être de même nature afin d'être comparées. En particulier, les informations qu'elles contiennent doivent concerner les mêmes caractères biométriques : dans le présent exemple l'iris.

Dans ce cas, la base de données DB peut également comprendre, pour chaque donnée d'iris $b_i$, un code de masque $m_i$ correspondant, et le serveur de contrôle peut également acquérir un code de masque m correspondant à l'image d'iris b, ou traiter la donnée b en vue de l'obtenir. Ces codes de masque indiquent les zones de l'iris visibles, et donc exploitables, ces zones étant typiquement celles qui ne sont pas masquées par les paupières.

Les codes de masque m et $m_i$ ont été représentés entre parenthèses dans les figures 1, 5 et 6, car ils sont optionnels, n'étant typiquement employés que dans le cas où le procédé d'identification est réalisé sur la base d'une donnée d'iris.

De façon analogue, le serveur de contrôle génère, à partir de l'image de l'iris acquise auprès de l'individu I, un code de masque m correspondant à la partie visible de l'iris.

Ces types de données contiennent en général beaucoup d'information, elles sont typiquement codées sous un format de 256 octets, soit 2048 bits. Dans la suite on nomme n le nombre de bits des données b et $b_i$.

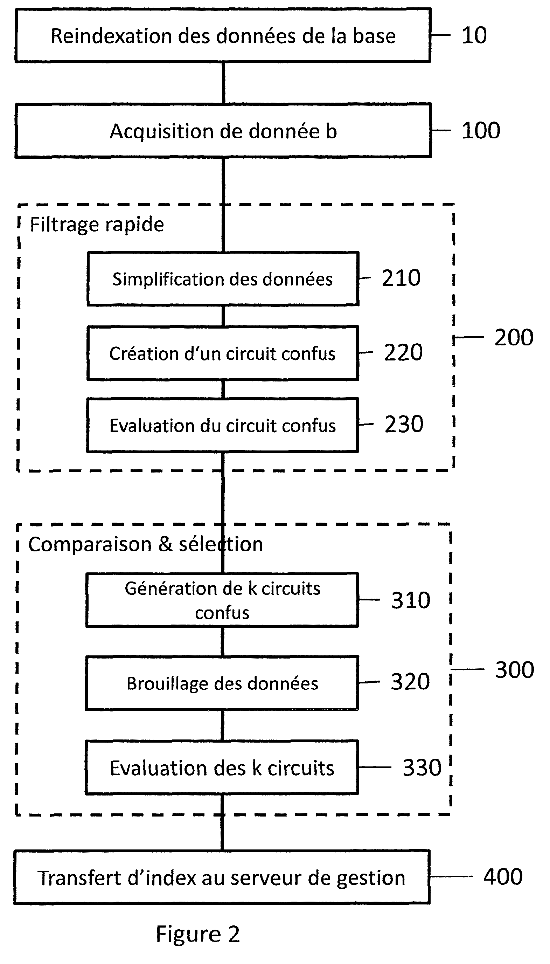

On va maintenant décrire un exemple de mise en oeuvre de procédé d'identification en référence à la figure 2.

Avant chaque processus d'identification, le serveur de gestion SG réindexe de façon aléatoire l'ensemble des données $b_i$ de la base (étape 10) afin que le serveur de contrôle SC ne puisse mémoriser aucune information sur l'historique des identifications et leurs correspondances avec les données biométriques utilisées pour celles-ci.

Au cours d'une étape 100, le serveur de contrôle SC procède à l'acquisition de la donnée b de l'individu. Puis, il déclenche une première étape 200 de filtrage rapide des N données biométriques de la base, en identifiant les p données, p étant inférieur à N et fixé à l'avance par les serveurs SC et SG, présentant les plus grandes similarités avec b.

### Filtrage rapide

Afin de minimiser le temps de calcul pour cette étape, le serveur de contrôle SC et le serveur de données SG simplifient les données b et $b_0$ à $b_{N-1}$, typiquement en réduisant la taille de ces données au cours d'une étape 210.

A titre d'exemple, dans le cas où les données sont des images d'iris codées sur 2048 bits, les serveurs SC et SG peuvent réduire les tailles des données à 128 bits. Pour ce faire, les serveurs SC et SG peuvent convenir d'un ensemble d'indexation A qui soit un sous-ensemble de l'ensemble {1, .., n}, tels que les bits des données b et $b_i$ indexés par les éléments de A soient parmi les plus significatifs des données. On nomme t le cardinal de A, t étant inférieur à n. Dans le cas de l'exemple ci-dessus, n vaut 2048 et t vaut 128.

Les serveurs SG et SC génèrent alors des données simplifiées s et $s_i$, i étant compris entre 0 et N-1, ces données comprenant respectivement les bits de b et $b_i$ indexés par A, de sorte que les données s et si sont codées sur t bits au lieu de n initialement.

Avec ces données simplifiées, les serveurs SC et SG peuvent réaliser N opérations de comparaison 1 : 1 entre s et chacune des si, i étant compris entre 0 et N-1, pour identifier les p données simplifiées si de la base DB les plus proches de s. Les fonctions mathématiques de comparaison de données biométriques sont connues de l'Homme de l'art.

On peut par exemple, dans le cas où les données sont des images d'iris, calculer une distance de Hamming $D_i$ entre s et chacune des si, la distance de Hamming étant le nombre de bits incohérents entre les deux données comparées. Une technique de filtrage analogue est décrite dans le document F. Hao, J. Daugman, and P. Zielinski. "A fast search algorithm for a large fuzzy database". IEEE Transactions on Information Forensics and Security, 3(2), 2008.

Les p données les plus proches de s sont dans ce cas les p données présentant les distances de Hamming les plus faibles avec s.

L'étape de filtrage est réalisée de façon sécurisée, c'est-à-dire de sorte que les serveurs SG et SC n'obtiennent aucune information sur les données de l'autres, respectivement la donnée biométrique b de l'individu ou celles $b_i$ de la base.

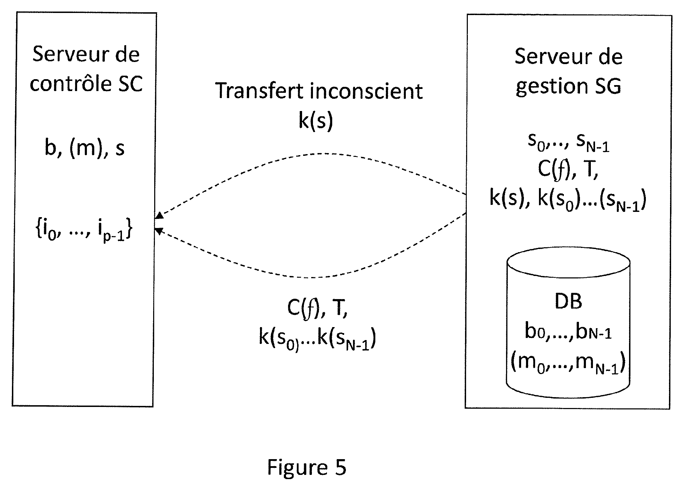

Pour ce faire on utilise par exemple une méthode de calcul sécurisé multipartite mettant en oeuvre le protocole de Yao décrit ci-après dans la description de la sécurisation de l'étape de filtrage en référence à la figure 5.

Au préalable il est nécessaire d'expliciter deux pré-requis employés dans le protocole de Yao : les transferts inconscients et les circuits confus.

### Transferts inconscients

Le protocole de Yao met en oeuvre des transferts inconscients (connus en anglais sous le nom « oblivious transfers »), qui sont des opérations de calcul entre deux parties P1 et P2.

Dans ce type d'opération, P1 dispose d'une liste de N éléments indexés $X_i$, et P2 connaît le nombre N d'éléments de la liste et choisit un indice i entre 0 et N-1. Par transfert inconscient, P2 récupère le **ième** élément de P1, c'est-à-dire l'élément de P1 indexé par i.

P1 n'apprend aucune information sur l'indice de l'élément récupéré par P2.

P2 ne récupère quant à lui aucune information sur les autres éléments de la liste détenus par P1.

### Circuits confus

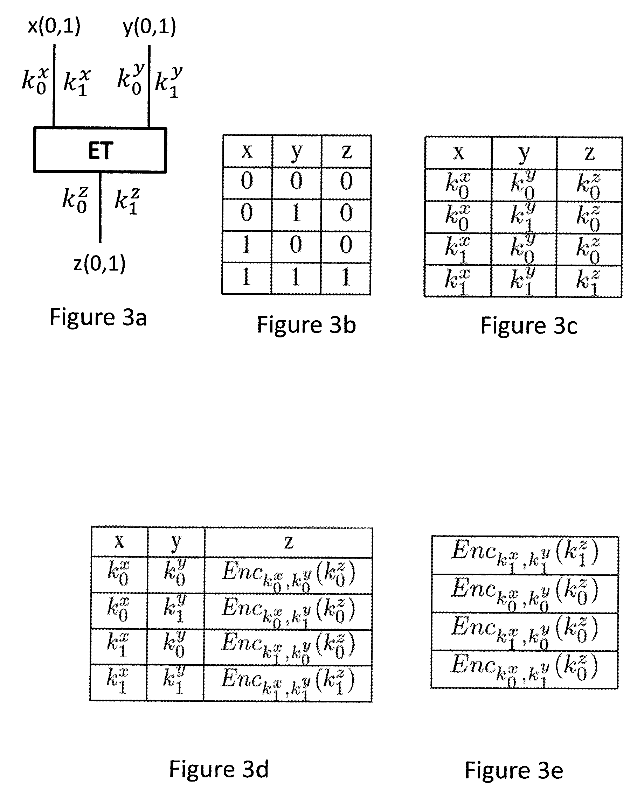

Le protocole de Yao met également en oeuvre des circuits confus (connus en anglais sous le nom « garbled circuits »). La figure 3 illustre un exemple de réalisation d'un tel circuit confus.

En bref, un circuit confus, dont un schéma est représenté à titre d'exemple en figure 3a, est un circuit binaire crypté obtenu à partir d'un circuit de calcul binaire de base d'une fonction à évaluer, ce circuit étant décomposé en une succession de portes logiques élémentaires. Le schéma du circuit binaire illustré en figure 3a ne comprend que la fonction élémentaire « ET », qui comporte deux entrées x et y, chacune pouvant prendre la valeur binaire 0 ou 1, et une sortie z, pouvant également prendre la valeur binaire 0 ou 1.

De manière traditionnelle, à chaque porte logique est attribuée une table de vérité, établissant le lien logique entre les sorties et les entrées. On a illustré à titre d'exemple en figure 3b la table de vérité de la fonction logique « ET ».

Pour assurer la sécurisation de l'évaluation de la fonction, chaque entrée et chaque sortie possibles de chaque porte logique élémentaire sont chiffrées par le créateur du circuit confus, au moyen de paires de clés de chiffrement aléatoires, correspondant aux deux valeurs booléennes possibles, propres à chaque entrée ou sortie. On a par exemple en figure 3c remplacé les valeurs binaires 0 et 1 que peut prendre x par des clés correspondantes $k_0^x$ et $k_1^x$, et de même pour les valeurs prises par y et z.

Ceci permet d'obtenir une table de vérité où les valeurs binaires d'entrées et de sorties sont remplacées par des clés de chiffrement.

Les sorties de chaque porte logique sont ensuite cryptées par les clés de chiffrement des valeurs des entrées correspondantes, pour obtenir une table de vérité cryptée ou confuse («garbled ») en figure 3d.

Ainsi par exemple, dans le cas de la fonction ET, la clé de chiffrement $k_0^z$ correspondant à la valeur 0 de z apparaît dans tous les cas où x et y ne sont pas égaux à 1. En revanche, cette clé $k_0^z$ n'est pas cryptée de la même manière selon les valeurs prises par x et y : en effet, si x et y valent tous deux 0, la clé $k_0^z$ est cryptée au moyen des clés $k_0^x$ et $k_0^y$ : on note cette clé cryptée

$$\text{Enc}_{k_0^x, k_0^y}(k_0^z).$$

Enfin, on retire les clés d'entrée de la table, et les clés obtenues pour chaque sortie sont réordonnées de façon aléatoire comme en figure 3e, la table de vérité cryptée et brouillée ainsi obtenue est ce que l'on appelle véritablement le circuit confus.

Pour pouvoir évaluer la fonction du circuit à partir des clés de chiffrement, une table de concordance T entre les clés de chiffrement du résultat de la fonction qu'on évalue et les valeurs correspondantes des bits est générée par le créateur du circuit.

### Protocole de Yao

Enfin, le protocole de Yao est une méthode de calcul sécurisé dans laquelle plusieurs parties souhaitent réaliser un calcul à partir de données dont elles disposent, sans communiquer entre elles la teneur de ces données.

Pour ce faire, l'une des parties crée un circuit confus de calcul d'une fonction à évaluer, comme décrit ci-dessus, ainsi que des paires de clés de chiffrement (une pour la valeur binaire 0 et une pour la valeur binaire 1) pour chacun des bits d'entrées et de sorties des portes logiques du circuit. Le créateur du circuit confus génère également une table de concordance T entre les clés de chiffrement du résultat de la fonction et le résultat lui-même.

Le créateur du circuit confus envoie ensuite à l'autre partie (ou aux autres parties) le circuit confus, la table de concordance, et les clés de chiffrement des bits des données d'entrée appartenant au créateur.

Ainsi, pour chaque bit x d'entrée du créateur du circuit égal à 0 (respectivement 1), le créateur envoie uniquement la clé de chiffrement $k_0^x$ (resp. $k_1^x$). Comme ces clés sont aléatoires, les utilisateurs du circuit confus ne peuvent obtenir aucune information sur les bits correspondant des données détenues par le créateur.

En outre, les utilisateurs du circuit confus récupèrent auprès du créateur, par transfert inconscient, les clés correspondant aux bits des données d'entrée de la fonction qu'ils possèdent.

Ainsi, pour chaque bit y d'entrée de l'utilisateur, le créateur prépare une liste à deux éléments composée de $k_0^y$ et $k_1^y$ et l'index choisi par l'utilisateur pour le transfert inconscient est la valeur du bit y.

Le recours à la méthode du transfert inconscient permet que le créateur n'obtienne aucune information sur les valeurs des bits des données des utilisateurs du circuit.

Enfin, l'utilisateur du circuit confus peut évaluer la fonction à l'aide des clés qu'il a obtenues, et traduire le résultat qu'il obtient en sortie de la fonction à l'aide de la table de concordance. Il peut optionnellement communiquer le résultat au créateur du circuit.

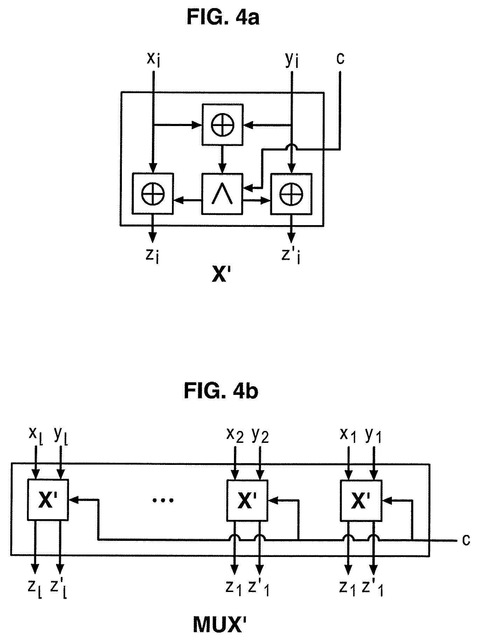

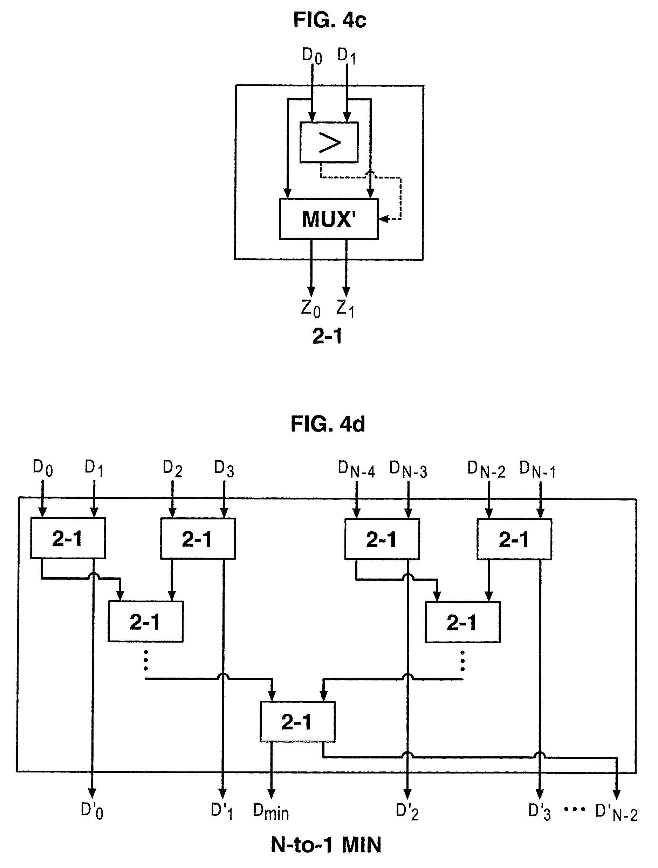

De retour à l'étape de filtrage rapide 200, pour mettre en oeuvre le filtrage des données biométriques simplifiées $s_i$ de la base, les serveurs de contrôle SC et de gestion SG utilisent le protocole de Yao pour le calcul d'une fonction de filtrage de façon sécurisée dont les éléments constitutifs sont illustrés en figure 4. La mise en oeuvre de cette étape est représentée schématiquement en figure 5.

Le serveur de gestion SG crée au cours d'une étape 220 un circuit confus C représentant une fonction f (noté C(f) en figure 5) qui réalise à la fois le calcul de la distance de Hamming entre deux données, et les comparaisons des distances de Hamming entre elles pour identifier les p distances minimales.

La fonction de calcul de la distance de Hamming est connue de l'Homme du métier. On peut la noter $D_i = \|(s \oplus s_i)\|$.

Les distances de Hamming calculées de la sorte sont comparées entre elles par les opérations logiques illustrées en figure 4d. Ces opérations comportent des sous-fonctions illustrées dans les figures 4a, 4b et 4c.

En figure 4a, la fonction **X'** est une fonction comprenant trois bits d'entrée, $x_i$, $y_i$, et c, et qui génère en sortie $(x_i, y_i)$ si c vaut 0, et $(y_i, x_i)$ si c vaut 1. Cette fonction **X'** est généralisée en figure 4b à une fonction **MUX'** dont les entrées sont des données comprenant une pluralité de bits d'entrées $x_i$, $y_i$.

En figure 4c est représentée une fonction de comparaison appelée « **2-1** ». Elle a pour entrées deux distances de Hamming, en l'occurrence notées $D_0$ et $D_1$ pour la comparaison des données simplifiées $s_0$ et $s_1$ à la donnée s de l'individu. En sortie, elle donne la distance de Hamming minimale entre les deux comparées.

Pour ce faire elle utilise une fonction de comparaison « > » dont la sortie (1 si $D_0$ est supérieure à $D_1$ et 0 sinon) est l'entrée c d'une fonction **MUX'** consécutive.

Enfin, la fonction générale de comparaison des distances de Hamming $D_i$ implémente en référence à la figure 4d une méthode de tri traditionnelle dans laquelle toutes les distances sont comparées entre elles par paires à des niveaux successifs au niveau des cases « **2-1** », les distances minimales d'un premier niveau étant les entrées des comparaisons du niveau suivant.

On obtient à la fin de ce schéma logique la distance minimale $D_{min}$ parmi les N distances comparées. Cette étape de comparaison est itérée p fois, à chaque fois en excluant la distance minimale identifiée à l'étape précédente, de façon à obtenir finalement les p distances $D_i$ minimales.

Une fois le circuit confus C généré, le serveur de gestion SG crée les clés de chiffrement de chacune des entrées de la fonction f, ainsi que les clés de chiffrement des sorties de chaque opération logique élémentaire de la fonction f, les sorties d'une opération logique étant les entrées d'une opération logique suivante. Il génère en particulier une paire de clés de chiffrement pour chaque bit de chaque donnée simplifiée s et $s_i$.

Enfin, le serveur de gestion SG génère une table de concordance T mais, contrairement aux protocoles de Yao traditionnels, cette table de concordance ne porte pas sur les clés de sorties de la fonction évaluée, mais sur les sorties des étapes « > » de comparaison des distances de Hamming de chaque opération « **2-1** ».

Le serveur de gestion SG envoie au serveur de contrôle SC le circuit confus C, la table de concordance T, et les clés de chiffrement des bits des données biométriques simplifiées $s_i$ de la base DB, notées, pour chaque bit u de chaque donnée si, $k^0(s_i^u)$ ou $k^1(s_i^u)$ selon la valeur du bit u. On note plus simplement sur la figure 5 l'ensemble des clés de chiffrement $k(s_0),...k(s_{N-1})$.

En outre, par transfert inconscient, le serveur de contrôle SC récupère les clés de chiffrement k(s) des bits de la donnée biométrique simplifiée de l'individu s.

Le serveur de contrôle SC peut alors évaluer au cours d'une étape 230 la fonction de comparaison entre les données simplifiées $s_i$ de la base et la donnée simplifiée s de l'individu à l'aide du circuit confus C et des clés k, pour identifier les p données $s_i$ présentant le plus de similarités avec la donnée s de l'individu.

Comme le serveur de contrôle SC ne possède que la table de concordance T des clés des sorties des étapes de comparaison « > », le résultat qu'il obtient n'est pas la valeur des différentes distances de Hamming, qui le cas échéant lui fourniraient des informations sur les données, mais les index des p données $s_{i0}...s_{ip-1}$ sélectionnées.

A la fin de cette étape de filtrage, le serveur SC ne connaît que la liste $\{i_0, .., i_{p-1}\}$ des indices des p données simplifiées $\{s_{i0},...,s_{ip-1}\}$ présentant les distances de Hamming minimales avec la donnée s de l'individu, de sorte que le serveur de contrôle SC n'apprend aucune information sur les données simplifiées sélectionnées $\{s_{i0}, ..., s_{ip-1}\}$ et a fortiori sur les données de la base correspondante $\{b_{i0},...,b_{ip-1}\}$.

Le serveur de gestion SG quant à lui n'a obtenu aucune information sur la donnée biométrique simplifiée s de l'individu et a fortiori sur la donnée b d'origine.

*Comparaison et sélection*

L'étape de comparaison et de sélection 300 est opérée sur les données $b_{ij}$, j étant compris entre 0 et p-1, correspondant aux données simplifiées $s_{ij}$ identifiées lors de l'étape de filtrage rapide 200. Elle a pour but de déterminer, à partir des p données simplifiées les plus proches de la donnée biométrique de l'individu, s'il existe une ou plusieurs données dont les similarités avec la donnée de l'individu excèdent un seuil n prédéterminé.

De façon connue de l'Homme du métier, ce seuil est choisi pour permettre d'établir la correspondance de données biométriques avec des taux de faux positifs et de faux négatifs optimaux.

De façon similaire au protocole de Yao, le serveur de gestion SG crée, au cours d'une étape 310, p circuits confus $C_0...C_{p-1}$, chacun étant utilisé pour évaluer une fonction de comparaison *f'* à une donnée biométrique $b_{ij}$ sélectionnée précédemment, (j étant compris entre 0 et p-1) et son masque correspondant $m_{ij}$, en n'utilisant que les données brouillées correspondantes.

La fonction de comparaison f' utilisée dans l'étape de comparaison et de sélection 300 est distincte de la fonction f utilisée pour le filtrage 200.

Dans le cas où les données biométriques sont des images d'iris, la fonction de comparaison *f'* peut être la distance de Hamming normalisée, c'est-à-dire la distance de Hamming calculée sur les codes de 2048 bits, et prenant en compte les masques associés aux images d'iris, c'est-à-dire les codes indiquant les zones de l'iris qui sont masquées, typiquement par une paupière, et qui ne sont donc pas pertinentes pour la comparaison.

On pourra pour plus d'information sur la distance de Hamming normalisée se référer à la méthode de Daugman décrite dans le document J. Daugman, « How Iris Récognition Works » IEEE transactions on circuits and systems for video technology, Vol. 14, No. 1, JANUARY 2004.

Si on note X et Y deux images d'iris codées sur 2048 bits, et m(X) et m(Y) leurs masques associés, la distance de Hamming normalisée s'écrit $\mathrm{HD}(\mathrm{X}, \mathrm{Y}) =$

$$\frac{\|(X \oplus Y) \cap m(X) \cap m(Y)\|}{\|m(X) \cap m(Y)\|}.$$

L'objet de cette étape est donc de calculer $f(b,b_{ij}) = HD(b,b_{ij})$ pour toutes les données $b_{ij}$ préalablement sélectionnées lors de l'étape de filtrage rapide, et de retenir celle pour laquelle HD $(b,b_{ij}) < \varepsilon$, où $\varepsilon$ est un seuil prédéterminé propre à la comparaison des distances de Hamming. Bien entendu, le seuil de similarité $\eta$ que doivent excéder les comparaisons est inversement proportionnel au seuil $\varepsilon$ dans le cas de la comparaison par calcul des distances de Hamming, puisque celles-ci dénombrent les dissemblances entre les données et non les similarités.

Pour optimiser le calcul, les circuits $C_j$, j étant compris entre 0 et p-1, sont de préférence construits pour effectuer la comparaison $\|(X \oplus Y) \cap m(X) \cap m(Y)\| < \varepsilon \|m(X) \cap m(Y)\|$, et non $\frac{\|(X \oplus Y) \cap m(X) \cap m(Y)\|}{\|m(X) \cap m(Y)\|} < \varepsilon$.

Pour chaque circuit $C_j$ le serveur de gestion SG génère également les clés de chiffrement k des entrées et sorties de chaque porte logique, comprenant en particulier une paire de clés de chiffrement pour chaque bit d'entrée de la fonction à évaluer, c'est-à-dire pour chaque bit d'entrée de la donnée b et des données de la base $b_i$, ainsi que la table de correspondance T des clés de sortie de la fonction.

Le serveur de gestion SG envoie au serveur de contrôle SC les circuits confus $C_j$ et les tables de correspondance $T_j$ respectives des circuits.

Le serveur de contrôle SC récupère, par transfert inconscient et pour chaque circuit confus, les clés de chiffrement des bits de la donnée biométrique b de l'individu I.

Le serveur de contrôle SC doit enfin récupérer les valeurs des données $b_{ij}$ de la base qui ont été sélectionnées, ainsi que les clés correspondantes, afin de pouvoir les comparer à la donnée b de l'individu, sans pour autant apprendre d'informations sur ces données.

Pour ce faire, le serveur de gestion SG brouille d'abord l'ensemble des données $b_i$, au cours d'une étape 320, pour obtenir des données brouillées $b'_i$.

Plus précisément, le serveur de gestion SG génère, pour chacune des p données de référence $b_{i0},...,b_{ip-1}$ correspondant aux données simplifiées sélectionnées $s_{i0},...,s_{ip-1}$, et pour chaque position u possible d'un bit dans la représentation binaire de cette donnée, une permutation aléatoire $\tau_u^{ij}$ de $\{0,1\}$, et applique ladite permutation aléatoire $\tau_u^{ij}$ au bit de ladite position u de chacune des N données $b_i$ de la base pour créer p bases de données brouillées correspondant aux données initiales $(b_i)$ de la base. Ces bases peuvent être notées

$$DB^{i_j} = \left\{ b^{0,i_j}, ..., b^{N-1,i_j} \right\},$$ où pour tout u compris entre 1 et n, et pour tout k compris entre 0 et N-1,

$$b_u^{k,i_j} = \tau_u^{i_j}(b_u^k).$$

La permutation de {0,1} ne peut avoir que deux résultats, sur les bits des données $b_i$ : soit elle convertit les valeurs binaires des bits (1, 0) en leur opposée (0, 1) soit elle maintient les valeurs des bits.

Le serveur de gestion peut de la même manière brouiller les masques $m_i$ pour obtenir des masques brouillés $m'_i$.

Par transfert inconscient, le serveur de contrôle SC récupère les données brouillées $b'_{i_j,i_j}$, c'est-à-dire les données d'index $i_j$, j compris entre 0 et p-1, et brouillées par les permutations respectives d'indices $i_j$. On notera $b'_{i_j}$ les données brouillées correspondant aux données sélectionnées $b_{i_j}$. D'autres méthodes de brouillage peuvent être envisagées.

Le serveur de contrôle n'obtient aucune information sur les données sélectionnées, et le serveur de gestion SG n'obtient aucune information sur les index de ces données.

Puis, afin que le serveur de contrôle puisse évaluer le circuit confus à l'aide des données brouillées $b'_{i_j}$, le serveur de gestion brouille les clés de chiffrement correspondantes.

Les clés de chiffrement générées par le serveur de gestion SG pour un bit u d'une donnée $b_i$ de la base sont notées respectivement $k^0(b_i^u)$ et $k^1(b_i^u))$ en fonction de la valeur binaire du bit u.

Pour un bit d'une donnée brouillée $b'^u_{i_j}$, les clés brouillées correspondantes sont

$$k'^0\left(b'^u_{i_j}\right) = k^{\tau^u_{i_j}(0)}(b_{i_j}^u)$$ et

$$k'^1\left(b'^u_{i_j}\right) = k^{\tau^u_{i_j}(1)}(b_{i_j}^u),$$ en fonction de la valeur binaire, 0 ou 1 du bit u. Avec ces clés de chiffrement, le serveur de contrôle SC peut effectuer les calculs à partir des fonctions brouillées puisqu'on dispose de la relation

$$k'\left(b'^u_{i_j}\right) = k(b_{i_j}^u).$$

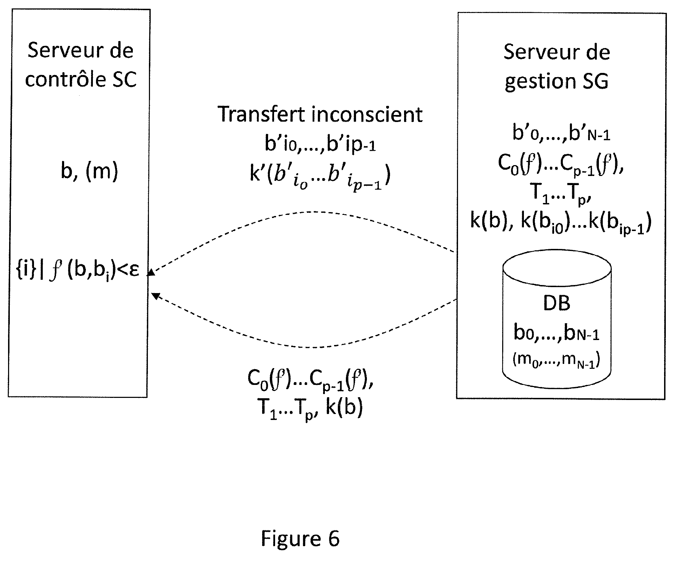

Le serveur de gestion récupère enfin, par transfert inconscient, les clés de chiffrement $k'^0\left(b'^u_{i_j}\right)$ ou $k'^1\left(b'^u_{i_j}\right)$, (notées plus simplement sur la figure 6 k'($b'_{i_0}$...$b'_{i_{p-1}}$)) pour chacun des bits de chacune des données biométriques brouillées, en fonction des valeurs binaires respectives de ces bits.

Il évalue enfin la fonction au cours d'une étape 330 à partir des clés de chiffrement obtenues, qui rend pour résultat le fait que la donnée biométrique $b_{i_j}$ correspondant à la donnée brouillée $b'_{i_j}$ correspond ou non à b au-delà du seuil n prédéterminé.

A l'issue de l'ensemble des évaluations réalisées sur les circuits confus $C_j$, le serveur de contrôle SC dispose de l'index i de la donnée biométrique $b_i$ stockée dans la base qui correspond à la donnée de l'individu, si elle existe. Le serveur peut également disposer de plusieurs index, si plusieurs données de la base correspondent à celle de l'individu I.

Le serveur de contrôle SC communique l'index $i_{ID}$ obtenu au serveur de gestion SG au cours d'une étape 400, le serveur de gestion SG qui identifie alors la donnée biométrique $b_{ID}$, et l'individu répertorié correspondant, qui a été identifié comme l'individu I.

Si le système d'identification est placé en amont d'une zone à accès contrôlé, par exemple, le serveur de contrôle SC ou le serveur de gestion SG peuvent autoriser ou non l'accès de l'individu I à la zone.

Ainsi le procédé selon l'invention permet une identification plus rapide que les procédés proposés jusqu'à présent, grâce à l'étape de filtrage rapide réalisée sur des données biométriques simplifiées.

Elle reste pourtant tout à fait sûre, grâce à l'étape de brouillage des données sélectionnées après l'étape de filtrage rapide.

## Revendications

1. Procédé d'identification d'un individu ou d'un objet (I), dans un système comprenant un serveur de contrôle (SC), adapté pour acquérir une donnée (b) de l'individu (I) ou de l'objet à identifier, et un serveur de gestion (SG) d'une base de données (DB) comprenant N données de référence $(b_i)$ indexées de N individus répertoriés, la donnée (b) de l'individu (I) et les données de référence $(b_i)$ étant codées sur n bits,

   dans lequel, pour identifier l'individu ou l'objet (I), on compare sa donnée (b) avec chacune des N données $(b_i)$ de la base, afin de déterminer si la donnée (b) de l'individu ou l'objet (I) à identifier correspond à l'une des N données $(b_i)$ de référence des N individus répertoriés,

   le procédé comprenant une étape au cours de laquelle le serveur de contrôle (SC) acquiert (100) la donnée (b) de l'individu ou l'objet à identifier, et le procédé étant **caractérisé en ce qu'**il comprend en outre des étapes au cours desquelles :

   - le serveur de contrôle (SC) et le serveur de gestion (SG) convertissent (210) les données de références $(b_i)$ de la base et la donnée (b) de l'individu ou l'objet (I) à identifier en données simplifiées $(s_i, s)$ de moindre taille, les données simplifiées $(s_i, s)$ étant codées sur t bits, t étant inférieur à n,

- le serveur de contrôle (SC) détermine (200) un ensemble de p index ($i_0,...,i_{p-1}$) de données simplifiées ($s_{i_0},...,s_{i_{p-1}}$) de la base (DB), p étant inférieur à N, présentant le plus de similarités avec la donnée simplifiée (s) de l'individu ou l'objet (I) à identifier, de façon sécurisée entre chacune des N données simplifiées ($s_i$) de la base de données (DB) et la donnée simplifiée (s) de l'individu ou l'objet (I) à identifier, ledit ensemble étant déterminé par la mise en oeuvre d'une méthode de calcul sécurisé multipartite dans laquelle le serveur de gestion (SG) génère (220) un circuit confus de calcul d'une fonction à évaluer,

  ○ le circuit confus ayant pour entrées l'ensemble des clés de chiffrements des bits des données simplifiées ($s_{i_0}, ...,s_{i_{p-1}}$) de la base (DB) et celles de la donnée simplifiée (s) de l'individu (I),
  ○ la fonction à évaluer étant le calcul des taux de similarités entre les données simplifiées ($s_{i_0}, ..., s_{i_{p-1}}$) de la base (DB) et la donnée simplifiée (s) de l'individu (I) suivi d'une étape de recherche des p données simplifiées de la base présentant le plus de similarités avec la donnée simplifiée (s) de l'individu, l'évaluation du circuit permettant de retrouver les index ($i_0,...,i_{p-1}$) des données simplifiées ($s_{i_0},...,s_{i_{p-1}}$) présentant le plus de similarités avec la donnée simplifiée (s) de l'individu,

  - le serveur de gestion (SG) brouille (320) les N données de référence ($b_i$) de la base de données (DB), et transfère au serveur de contrôle p données brouillées ($b'_{i_0},..., b'_{i_{p-1}}$) correspondant aux données simplifiées ($s_{i_0},...,s_{i_{p-1}}$) identifiées précédemment,
  - à partir des p données brouillées ($b'_{i_0},...,b'_{i_{p-1}}$), le serveur de contrôle (SC) détermine (300), par calcul sécurisé multipartite entre chacune des p données brouillées ($b'_{i_0},...,b'_{i_{p-1}}$) et la donnée (b) de l'individu ou l'objet, le ou les index ($i_{ID}$) d'une ou plusieurs données brouillées ($b'_{i_{ID}}$) dont les données de référence correspondantes ($b_{i_{ID}}$) présentent un taux de similarité avec la donnée (b) de l'individu ou l'objet qui excède un seuil (n) prédéterminé.

2. Procédé d'identification selon la revendication précédente, dans lequel le transfert des p données brouillées ($b'_{i_0},...,b'_{i_{p-1}}$) depuis le serveur de gestion (SG) vers le serveur de contrôle (SC) met en oeuvre une technique de transfert inconscient.

3. Procédé d'identification selon la revendication 1, dans lequel, après que le serveur de contrôle (SC) a déterminé le ou les index ($i_{ID}$) des données brouillées ($b'_{i_{ID}}$) dont les données de référence correspondantes ($b_{i_{ID}}$) présentent un taux de similarité avec la donnée (b) de l'individu (I) ou de l'objet qui excède un seuil (n) prédéterminé, le serveur de contrôle (SC) communique (400) ledit index ($i_{ID}$) au serveur de gestion (SG), et à partir du ou des index ($i_{ID}$), le serveur de gestion (SG) détermine la ou les données de référence ($b_{i_{ID}}$) de la base correspondant audit ou auxdits index, et identifie l'individu (i) ou l'objet comme un individu ou un objet répertorié dans la base (DB) possédant la donnée de référence ($b_{i_{ID}}$) correspondant à ou aux index ($i_{ID}$).

4. Procédé d'identification selon la revendication 1, dans lequel, pour brouiller les N données ($b_i$) de la base (DB), le serveur de gestion (SG) génère, pour chacune des p données de référence ($b_{ij}$) correspondant aux données simplifiées sélectionnées($s_{ij}$), une base de données brouillée ($DB^{ij}$) correspondante comprenant N données brouillées ($b'_i$) pour lesquelles, pour chaque position (u) possible d'un bit dans la représentation binaire des données correspondantes ($b_i$), une permutation aléatoire ($\tau_u^{ij}$), est appliquée au bit de ladite position (u).

5. Procédé d'identification selon la revendication 1, dans lequel l'identification porte sur un individu, et les données de références ($b_i$) de la base (DB) et la donnée (b) de l'individu (I) à identifier sont des données biométriques.

6. Procédé d'identification selon la revendication 1, dans lequel chaque donnée (b, $b_i$) comprend un ensemble de bits indexés, et dans lequel, au cours de l'étape de conversion (210) des données (b, $b_i$) en données simplifiées (s, $s_i$), on définit un ensemble d'indexation (A) comprenant des numéros d'indexation des bits des données (b, $b_i$), et on convertit les données (b, $b_i$) en ne conservant pour les données simplifiées (s, $s_i$) que les bits indexés par les numéros de l'ensemble d'indexation, lesdits numéros d'indexation étant choisis pour concerner les bits les plus pertinents.

7. Procédé selon la revendication précédente, dans lequel la détermination des données simplifiées ($s_i$) de la base (DB) présentant le plus de similarités avec la donnée simplifiée (s) de l'individu (I) ou de l'objet est réalisée par calcul de distances de Hamming entre les données simplifiées ($s_i$) de la base (DB) et la donnée simplifiée (s) de l'individu.

8. Procédé d'identification selon la revendication 1, dans lequel l'étape de détermination des N données simplifiées ($s_i$) de la base (DB) présentant le plus de similarités avec la donnée simplifiée (s) de l'individu (I) à identifier est mise en oeuvre par calcul multipartite sécurisé.

9. Procédé d'identification selon l'une des revendications précédentes, dans lequel, au cours de l'étape de calcul multipartite sécurisé entre les données brouillées ($b'_{i_0}$, ...,$b'_{i_{p-1}}$) de la base (DB) et la donnée (b) de l'individu,

    - on calcule un taux de similarité entre chaque donnée de la base ($b_{i_0}$,...,$b_{i_{p-1}}$) correspondante à chaque donnée brouillée ($b'_{i_0}$,...,$b'_{i_{p-1}}$) et la donnée de l'individu (b),
    - on compare les taux de similarité obtenus au seuil (n) prédéterminé, pour sélectionner le ou les index de la ou les données de la base (DB) présentant un taux de similarité excédant ledit seuil ($\eta$).

10. Procédé selon l'une des revendications précédentes, dans lequel chaque étape de calcul multipartite sécurisé comprend les sous-étapes suivantes :

    - le serveur de gestion (SG) génère au moins un circuit confus (C) de calcul d'une fonction (f) à évaluer,

chaque circuit confus (C) ayant pour entrées un ensemble de clés de chiffrement de bits de données d'entrée de la fonction (f) à évaluer et pour sortie les clés de chiffrement correspondant aux bits du résultat de la fonction (f) évaluée, et comprenant :

    o les étapes de calcul de la fonction (f) décomposées sous forme d'opérations logiques élémentaires, et
    o un ensemble de clés (k) de codage de chacune des entrées et sorties possibles de chaque opération logique élémentaire,
    - le serveur de gestion (SG) génère aléatoirement lesdites clés de codage (k),
    - le serveur de gestion (SG) communique au serveur de contrôle (SC), en mettant en oeuvre une technique de transfert inconscient, pour chaque circuit confus (C),

        o des clés de codages (k) correspondant aux valeurs des bits des entrées de la fonction (f) à évaluer, et
        o une table de décodage (T) de la sortie de chaque circuit confus (C) ou d'une ou plusieurs sorties d'une opération logique de celui-ci, et

    - à partir des clés (k) obtenues, le serveur de contrôle (SC) évalue chaque circuit confus (C) en utilisant comme entrée les clés obtenues.

11. Procédé selon la revendication précédente, dans lequel, pour calculer et comparer les taux de similarité entre les données ($b_{i_0}$,...,$b_{i_{p-1}}$) correspondant aux données brouillées ($b'_{i_0}$,...,$b'_{i_{p-1}}$) et la donnée (b) de l'individu, un calcul sécurisé multipartite est mis en oeuvre, dans lequel le serveur de gestion (SG) génère (310) pour chacune des données de la base sélectionnées un circuit confus correspondant,

    - les entrées de chaque circuit confus ($C_0$... $C_{p-1}$) étant des clés de chiffrement de la donnée brouillée ($b'_{i_0}$,...,$b'_{i_{p-1}}$) correspondante et celles de la donnée (b) de l'individu (I),
    - la fonction (f) à évaluer de chaque circuit confus étant le calcul du taux de similarité entre la donnée de la base correspondante ($b_{i_0}$,...,$b_{i_{p-1}}$) et la donnée (b) de l'individu, et la comparaison du taux de similarité avec le seuil ($\eta$) prédéterminé, et
    - la sortie de chaque circuit ($C_0$... $C_{p-1}$) étant le résultat de la comparaison du taux de similarité avec le seuil ($\eta$) prédéterminé,

dans lequel le serveur de gestion (SG) génère et transfère au serveur de contrôle (SC), pour chaque circuit confus ($C_0$... $C_{p-1}$), des clés de codage brouillées (k') correspondant aux valeurs possibles des bits de la donnée brouillée ($b'_{i_0}$,...,$b'_{i_{p-1}}$) et des clés de codage (k) correspondant aux valeurs possibles des bits de la donnée (b) de l'individu, et transfère au serveur de contrôle (SC) les valeurs des bits de la donnée brouillée, et dans lequel les transferts des valeurs des bits de la donnée brouillée et des clés de codage correspondantes mettent en oeuvre une méthode de transfert inconscient.

12. Procédé selon la revendication précédente dans lequel la fonction (f) à évaluer de chaque circuit confus ($C_0$... $C_{p-1}$) comprend le calcul de la distance de Hamming normalisée entre chaque donnée ($b_{i_0}$, ..., $b_{i_{p-1}}$) correspondant à la donnée brouillée ($b'_{i_0}$, ..., $b'_{i_{p-1}}$) et la donnée (b) de l'individu (I).

13. Procédé d'identification selon l'une des revendications 11 ou 12 en combinaison avec la revendication 4, dans lequel la génération des clés de codage brouillées (k') d'une donnée brouillée ($b'_{ij}$) est réalisée en appliquant à des clés de codage (k) générées aléatoirement pour chaque bit de la donnée ($b_{ij}$) correspondante de la base, une réindexation suivant la même permutation ($\tau_u^{i_j}$) que celle appliquée audit bit de la donnée ($b_{ij}$) pour obtenir la donnée brouillée ($b'_{ij}$).

14. Procédé d'identification selon la revendication 1, comprenant une étape préliminaire (10) au cours de

laquelle les données ($b_0 ... b_{N-1}$) de la base (DB) sont réindexées de manière aléatoire par le serveur de gestion (SG).

15. Système d'identification d'un individu, comportant au moins un serveur de contrôle (SC) d'un individu (I) à identifier, et au moins un serveur de gestion (SG) d'une base (DB) de N données de référence ($b_0 ... b_{N-1}$) d'individus répertoriés,

le serveur de contrôle (SC) étant adapté pour procéder à l'acquisition d'une donnée (b) de l'individu (1),

le système étant **caractérisé en ce que** le serveur de contrôle (SC) et le serveur de gestion (SG) comportent des moyens de traitement adaptés pour :

- convertir (210) les données de références ($b_i$) de la base et la donnée (b) de l'individu ou l'objet (I) à identifier en données simplifiées ($S_i$, s) de moindre taille,
- déterminer (200) un ensemble de p index ($i_0,...,i_{p-1}$) de données simplifiées ($s_{i_0}, ... , s_{i_{p-1}}$) de la base (DB), p étant inférieur à N, présentant le plus de similarités avec la donnée simplifiée (s) de l'individu ou l'objet (I) à identifier, de façon sécurisée entre chacune des N données simplifiées ($s_i$) de la base de données (DB) et la donnée simplifiée (s) de l'individu ou l'objet (I) à identifier, ledit ensemble étant déterminé par la mise en oeuvre d'une méthode de calcul sécurisé multipartite dans laquelle le serveur de gestion (SG) génère (220) un circuit confus de calcul d'une fonction à évaluer,

  ∘ le circuit confus ayant pour entrées l'ensemble des clés de chiffrements des bits des données simplifiées ($s_{i_0}, ..., s_{i_{p-1}}$) de la base (DB) et celles de la donnée simplifiée (s) de l'individu (1),
  ∘ la fonction à évaluer étant le calcul des taux de similarités entre les données simplifiées ($s_{i_0}, ..., s_{i_{p-1}}$) de la base (DB) et la donnée simplifiée (s) de l'individu (I) suivi d'une étape de recherche des p données simplifiées de la base présentant le plus de similarités avec la donnée simplifiée (s) de l'individu, l'évaluation du circuit permettant de retrouver les index ($i_0,...,i_{p-1}$) des données simplifiées ($s_{i_0},..., s_{i_{p-1}}$) présentant le plus de similarités avec la donnée simplifiée (s) de l'individu,

- brouiller (320) les N données de référence ($b_i$) de la base de données (DB), et transférer p données brouillées ($b'_{i_0}, ..., b'_{i_{p-1}}$) correspondant aux données simplifiées ($s_{i_0}, ... , s_{i_{p-1}}$) identifiées précédemment,
- à partir des p données brouillées ($b'_{i_0}, ..., b'_{i_{p-1}}$),

déterminer (300), par calcul sécurisé multipartite entre chacune des p données brouillées ($b'_{i_0},...,b'_{i_{p-1}}$) et la donnée (b) de l'individu ou l'objet, le ou les index ($i_{ID}$) d'une ou plusieurs données brouillées ($b'_{iID}$) dont les données de référence correspondantes ($b_{iID}$) présentent un taux de similarité avec la donnée (b) de l'individu ou l'objet qui excède un seuil (n) prédéterminé.

sans que le serveur de contrôle (SC) n'obtienne d'informations sur les données de référence ($b_0 ... b_{N-1}$) stockées dans la base de données (DB), ni que le serveur de gestion (SG) n'obtienne d'informations sur la donnée (b) de l'individu (I) à identifier.

**Patentansprüche**

1. Verfahren zur Identifizierung eines Individuums oder eines Gegenstands (I) in einem System, das einen Kontrollserver (SC), der ausgebildet ist, um eine Angabe (b) des zu identifizierenden Individuums (I) oder des zu identifizierenden Gegenstands zu erfassen, und einen Verwaltungsserver (SG) einer Datenbank (DB), die N indexierte Referenzangaben ($b_i$) von N erfassten Individuen umfasst, die Angabe (b) des Individuums (I) und die Referenzenangaben ($b_i$) von n Bits codiert sind, umfasst,

wobei, um das Individuum oder den Gegenstand (I) zu identifizieren, seine Angabe (b) mit jeder der N Angaben ($b_i$) der Datenbank verglichen wird, um zu bestimmen, ob die Angabe (b) des zu identifizierenden Individuums oder Gegenstands (I) mit einer der N Referenzangaben ($b_i$) der N erfassten Individuen übereinstimmt,

wobei das Verfahren einen Schritt umfasst, bei dem der Kontrollserver (SC) die Angabe (b) des zu identifizierenden Individuums oder Gegenstands erfasst und das Verfahren **dadurch gekennzeichnet ist, dass** es ferner Schritte umfasst, bei denen:

- der Kontrollserver (SC) und der Verwaltungsserver (SG) die Referenzangaben ($b_i$) der Datenbank und die Angabe (b) des zu identifizierenden Individuums oder Gegenstands (I) in vereinfachte Angaben ($s_i$, s) geringerer Größe, die vereinfachte Angaben ($s_i$, s) von t Bits codiert sind, t kleiner als n ist, konvertieren,
- der Kontrollserver (SC) in abgesicherter Weise zwischen jeder der N vereinfachten Angaben ($s_i$) der Datenbank (DB) und der vereinfachten Angabe (s) des zu identifizierenden Individuums oder Gegenstands (I) eine Gruppe von p Indizes ($i_0,..., i_{p-1}$) vereinfachter Angaben ($s_{i_0},..., s_{i_{p-1}}$) der Datenbank (DB) bestimmt, wobei p kleiner als N ist, die die meisten Ähnlichkeiten mit der vereinfachten Angabe (s) des zu identifizierenden Individuums oder Gegenstands (I) aufweisen, wobei die Gruppe durch die Anwendung einer multipartiten abgesicherten Berechnungsmethode bestimmt wird, bei der der Verwaltungsserver (SG) einen Fuzzy Berechnungskreis einer zu evaluierenden Funktion generiert,

    o wobei der Fuzzy Kreis als Eingaben alle Chiffrierschlüssel der Bits der vereinfachten Angaben ($s_{i_0}$,..., $s_{i_{p-1}}$) der Datenbank (DB) und jener der vereinfachten Angabe (s) des Individuums (I) hat,

    o wobei die zu evaluierende Funktion die Berechnung der Ähnlichkeitsgrade zwischen den vereinfachten Angaben ($s_{i_0}$,..., $s_{i_{p-1}}$) der Datenbank (DB) und der der vereinfachten Angabe (s) des Individuums (I) ist, gefolgt von einem Schritt der Suche der p vereinfachten Angaben der Datenbank, welche die meisten Ähnlichkeiten mit der vereinfachten Angabe (s) des Individuums haben, wobei die Evaluierung des Kreises erlaubt, die Indexe ($i_0$,..., $i_{p-1}$) der vereinfachten Angaben ($s_{i_0}$,..., $s_{i_{p-1}}$) zu finden, die die meisten Ähnlichkeiten mit der vereinfachten Angabe (s) des Individuums haben,

- der Verwaltungsserver (SG) die N Referenzangaben ($b_i$) der Datenbank (DB) verwürfelt und an den Kontrollserver p verwürfelte Angaben ($b'_{i_0}$, ...,$b'_{i_{p-1}}$) überträgt, die den zuvor identifizierten vereinfachten Angaben ($s_{i_0}$,..., $s_{i_{p-1}}$) entsprechen,
- der Kontrollserver (SC) ausgehend von den p verwürfelten Angaben ($b'_{i_0}$, ...,$b'_{i_{p-1}}$) durch multipartite abgesicherte Berechung zwischen jeder der p verwürfelten Angaben ($b'_{i_0}$..., $b'_{i_{p-1}}$) und der Angabe (b) des Individuums oder Gegenstands den oder die Indizes ($i_{ID}$) einer oder mehrerer verwürfelter Angaben ($b'_{i_{ID}}$) bestimmt, deren entsprechende Referenzangaben ($b_{i_{ID}}$) einen Ähnlichkeitsgrad mit der Angabe (b) des Individuums oder Gegenstands aufweisen, der einen vorbestimmten Grenzwert (η) überschreitet.

**2.** Identifizierungsverfahren nach vorangehendem Anspruch, wobei bei der Übertragung der p verwürfelten Angaben ($b'_{i_0}$ ,..., $b'_{i_{p-1}}$) vom Verwaltungsserver (SG) an den Kontrollserver (SC) eine spontane Übertragungstechnik angewendet wird.

**3.** Identifizierungsverfahren nach Anspruch 1, wobei, nachdem der Kontrollserver (SC) den oder die Indizes ($i_{ID}$) der verwürfelten Angaben ($b'_{i_{ID}}$) bestimmt hat, deren entsprechende Referenzangaben ($b_{i_{ID}}$) eine Ähnlichkeitsrate mit der Angabe (b) des Individuums (I) oder des Gegenstands aufweisen, die einen vorbestimmten Grenzwert (η) überschreitet, der Kontrollserver (SC) den Index ($i_{ID}$) an den Verwaltungsserver (SG) kommuniziert, und der Verwaltungsserver (SG) ausgehend von dem oder den Indizes ($i_{ID}$) die Referenzangabe(n) ($b_{i_{ID}}$) der Datenbank bestimmt, die dem oder den Indizes entspricht, und das Individuum (i) oder den Gegenstand als ein Individuum oder einen Gegenstand identifiziert, der in der Datenbank (DB) verzeichnet ist, die die Referenzangabe ($b_{i_{ID}}$) besitzt, die dem oder den Indizes ($i_{ID}$) entspricht.

**4.** Identifizierungsverfahren nach Anspruch 1, wobei, um die N Angaben ($b_i$) der Datenbank (DB) zu verwürfeln, der Verwaltungsserver (SG) für jede der p Referenzangaben ($b_{i_j}$), die den ausgewählten vereinfachten Angaben ($s_{i_j}$) entspricht, eine entsprechende verwürfelte Datenbank ($DB^{i_j}$) generiert, die N verwürfelte Angaben ($b'_i$) umfasst, für die für jede mögliche Position (u) eines Bits in der binären Darstellung der entsprechenden Angaben ($b_i$) auf das Bit der Position (u) eine aleatorische Permutation $\left(\tau_u^{i_j}\right)$ angewendet wird.

**5.** Identifizierungsverfahren nach Anspruch 1, wobei die Identifizierung ein Individuum betrifft und die Referenzangaben ($b_i$) der Datenbank (DB) und die Angabe (b) des zu identifizierenden Individuums (I) biometrische Angaben sind.

**6.** Identifizierungsverfahren nach Anspruch 1, wobei jede Angabe (b, $b_i$) eine Gruppe indexierter Bits umfasst, und wobei, beim Konvertierungsschritt der Angaben (b, $b_i$) in vereinfachte Angaben (s, $s_i$), eine Indexierungsgruppe (A) definiert wird, die Indexierungsnummern der Bits der Angaben (b, $b_i$) umfasst, und die Angaben (b, $b_i$) konvertiert werden, wobei für die vereinfachten Angaben (s, $s_i$) nur die von den Nummern der Indexierungsgruppe indexierten Bits behalten werden, wobei die Indexierungsnummern ausgewählt sind, um die relevantesten Bits zu betreffen.

**7.** Verfahren nach vorangehendem Anspruch, wobei die Bestimmung der vereinfachten Angaben ($s_i$) der Datenbank (DB), die die meisten Ähnlichkeiten mit der vereinfachten Angabe (s) des Individuums (I) oder des Gegenstands aufweisen, durch Berechnung von Hamming-Abständen zwischen den vereinfachten Angaben ($s_i$) der Datenbank (DB) und der vereinfachten Angabe (s) des Individuums durchgeführt wird.

**8.** Identifizierungsverfahren nach Anspruch 1, wobei der Schritt der Bestimmung der N vereinfachten Angaben ($s_i$) der Datenbank (DB), die die meisten Ähnlichkeiten mit der vereinfachten Angabe (s) des zu identifizierenden Individuums (I) aufweist, durch die abgesicherte multipartite Berechnung durchgeführt wird.

9. Identifizierungsverfahren nach einem der vorangehenden Ansprüche, wobei, während des Schritts der abgesicherten multipartiten Berechnung zwischen den verwürfelten Angaben ($b'_{i_0}$, ...,$b'_{i_{p-1}}$) der Datenbank (DB) und der Angabe (b) des Individuums,

- eine Ähnlichkeitsrate zwischen jeder Angabe der Datenbank ($b_{i_0}$,...,$b_{i_{p-1}}$), die jeder verwürfelten Angabe ($b'_{i_0}$, ...,$b'_{i_{p-1}}$) und der Angabe des Individuums (b) entspricht, berechnet wird,
- die ermittelten Ähnlichkeitsraten mit dem vorbestimmten Grenzwert (n) verglichen werden, um den oder die Indizes der Angabe(n) der Datenbank (DB) auszuwählen, die eine Ähnlichkeitsrate haben, die den Grenzwert ($\eta$) überschreitet.

10. Verfahren nach einem der vorangehenden Ansprüche, wobei jeder Schritt der abgesicherten multipartiten Berechnung die folgenden Unterschritte umfasst:

- der Verwaltungsserver (SG) generiert mindestens einen Fuzzy Kreis (C) zur Berechnung einer zu evaluierenden Funktion (f),

wobei jeder Fuzzy Kreis (C) als Eingaben eine Gruppe von Chiffrierschlüsseln von Bits von Eingangsdaten der zu evaluierenden Funktion (f) und als Ausgabe die Chiffrierschlüssel, die den Bits des Ergebnisses der evaluierten Funktion (f) entsprechen, hat, und umfasst:

∘ die in Form elementarer logischer Operationen unterteilten Berechnungsschritte der Funktion (f), und
∘ eine Gruppe von Codierschlüsseln (k) jeder der möglichen Eingaben und Ausgaben jeder elementaren logischen Operation,
- der Verwaltungsserver (SG) generiert die Codierschlüssel (k) nach dem Zufallsprinzip,
- der Verwaltungsserver (SG) kommuniziert an den Kontrollserver (SC), bei Durchführung einer spontanen Übertragungstechnik, für jeden Fuzzy Kreis (C),

∘ Codierschlüssel (k), die den Werten der Bits der Eingaben der zu evaluierenden Funktion (f) entsprechen, und
∘ eine Decodiertabelle (T) der Ausgabe jedes Fuzzy Kreises (C) oder einer oder mehrerer Ausgaben einer logischen Operation derselben, und

- der Kontrollserver (SC) evaluiert, ausgehend von den erhaltenen Schlüsseln (k), jeden Fuzzy Kreis (C), indem er als Eingabe die erhaltenen Schlüssel verwendet.

11. Verfahren nach vorangehendem Anspruch, wobei, um die Ähnlichkeitsraten zwischen den Angaben ($b_{i_0}$,..., $b_{i_{p-1}}$) die den verwürfelten Angaben ($b'_{i_0}$, ...,$b'_{i_{p-1}}$) entsprechen, und der Angabe (b) des Individuums zu berechnen und zu vergleichen, eine multipartite abgesicherte Berechnung durchgeführt wird, wobei der Verwaltungsserver (SG) für jede der ausgewählten Angaben der Datenbank einen entsprechenden Fuzzy Kreis generiert,

- wobei die Eingaben jedes verwaschenen Kreises ($C_0$... $C_{p-1}$) Chiffrierschlüssel der entsprechenden verwürfelten Angabe ($b'_{i_0}$..., $b'_{i_{p-1}}$) und der Angabe (b) des Individuums (I) sind,
- wobei die zu evaluierende Funktion (f) jedes Fuzzy Kreises die Berechnung der Ähnlichkeitsrate zwischen der entsprechenden Angabe der Datenbank ($b_{i_0}$ ,..., $b_{i_{p-1}}$) und der Angabe (b) des Individuums und der Vergleich der Ähnlichkeitsrate mit dem vorbestimmten Grenzwert ($\eta$) ist, und
- wobei die Ausgabe jedes Fuzzy Kreises ($C_0$... $C_{p-1}$) das Ergebnis des Vergleichs der Ähnlichkeitsrate mit dem vorbestimmten Grenzwert ($\eta$) ist,

wobei der Verwaltungsserver (SG) für jeden Fuzzy Kreis ($C_0$... $C_{p-1}$) verwürfelte Codierschlüssel (k'), die den möglichen Werten der Bits der verwürfelten Angabe ($b'_{i_0}$,...,$b'_{i_{p-1}}$) entsprechen, und Codierschlüssel (k), die den möglichen Werten der Bits der Angabe (b) des Individuums entsprechen, generiert und an den Kontrollserver (SC) überträgt, und an den Kontrollserver (SC) die Werte der Bits der verwürfelten Angabe überträgt, und wobei die Übertragungen der Werte der Bits der verwürfelten Angabe und der entsprechenden Codierschlüssel auf eine spontane Übertragungsmethode zurückgreifen.

12. Verfahren nach vorangehendem Anspruch, wobei die zu evaluierende Funktion (f) jedes Fuzzy Kreises ($C_0$... $C_{p-1}$) die Berechnung des standardisierten Hamming-Abstands zwischen jeder Angabe ($b_{i_0}$,...,$b_{i_{p-1}}$), die der verwürfelten Angabe ($b'_{i_0}$, ...,$b'_{i_{p-1}}$) entspricht, und der Angabe (b) des Individuums (I) umfasst.

13. Identifizierungsverfahren nach einem der vorangehenden Ansprüche 10 oder 11 in Kombination mit Anspruch 4, wobei die Generierung der verwürfelten Codierschlüssel (k') einer verwürfelten Angabe ($b'_{i_j}$) durchgeführt wird, indem auf die nach dem Zufallsprinzip für jedes Bit der entsprechenden Angabe ($b_{ij}$) der Datenbank generierten Codierschlüssel (k) eine Neuindexierung gemäß derselben Permutation $\left(\tau_u^{i_j}\right)$ durchgeführt wird wie die, die für das Bit der Angabe ($b_{ij}$) angewendet wird, um die verwürfelte Angabe ($b'_{ij}$) zu erhalten.

14. Identifizierungsverfahren nach Anspruch 1, das einen vorbereitenden Schritt umfasst, bei dem die Angaben ($b_0$... $b_{N-1}$) der Datenbank (DB) vom Verwaltungsserver (SG) nach dem Zufallsprinzip neu indexiert werden.

15. System für die Identifizierung eines Individuums, das mindestens einen Kontrollserver (SC) eines zu identifizierenden Individuums (I) und mindestens einen Verwaltungsserver (SG) einer Datenbank (DB) mit N Referenzangaben ($b_0$... $b_{N-1}$) erfasster Individuen aufweist,

wobei der Kontrollserver (SC) ausgebildet ist, um die Erfassung einer Angabe (b) des Individuums (I) durchzuführen,

wobei das System **dadurch gekennzeichnet ist, dass** der Kontrollserver (SC) und der Verwaltungsserver (SG) Verarbeitungsmittel aufweisen, die ausgebildet sind, um:

- die Referenzangaben ($b_i$) der Datenbank und die Angabe (b) des zu identifizierenden Individuums oder Gegenstands (I) in vereinfachte Angaben ($s_i$, s) geringerer Größe zu konvertieren,
- in abgesicherter Weise zwischen jeder der N vereinfachten Angaben ($s_i$) der Datenbank (DB) und der vereinfachten Angabe (s) des zu identifizierenden Individuums oder Gegenstands (I) eine Gruppe von p Indizes ($i_0$,...$i_{p-1}$) vereinfachter Angaben ($s_{i_0}$,..., $s_{i_{p-1}}$) der Datenbank (DB) zu bestimmen, wobei p kleiner als N ist, die die meisten Ähnlichkeiten mit der vereinfachten Angabe (s) des zu identifizierenden Individuums oder Gegenstands (I) aufweisen, wobei die Gruppe durch die Anwendung einer multipartiten abgesicherten Berechnungsmethode bestimmt wird, bei der der Verwaltungsserver (SG) einen Fuzzy Berechnungskreis einer zu evaluierenden Funktion generiert,

∘ wobei der Fuzzy Kreis als Eingaben alle Chiffrierschlüssel der Bits der vereinfachten Angaben ($s_{i_0}$,..., $s_{i_{p-1}}$) der Datenbank (DB) und jener der vereinfachten Angabe (s) des Individuums (I) hat,
∘ wobei die zu evaluierende Funktion die Berechnung der Ähnlichkeitsgrade zwischen den vereinfachten Angaben ($s_{i_0}$,..., $s_{i_{p-1}}$) der Datenbank (DB) und der der vereinfachten Angabe (s) des Individuums (I) ist, gefolgt von einem Schritt der Suche der p vereinfachten Angaben der Datenbank, welche die meisten Ähnlichkeiten mit der vereinfachten Angabe (s) des Individuums haben, wobei die Evaluierung des Kreises erlaubt, die Indexe ($i_0$,..., $i_{p-1}$) der vereinfachten Angaben ($s_{i_0}$,..., $s_{i_{p-1}}$) zu finden, die die meisten Ähnlichkeiten mit der vereinfachten Angabe (s) des Individuums haben,

- die N Referenzangaben ($b_i$) der Datenbank (DB) zu verwürfeln und p verwürfelte Angaben ($b'_{i_0}$, ...,$b'_{i_{p-1}}$) zu übertragen, die den zuvor identifizierten vereinfachten Angaben ($s_{i_0}$,..., $s_{i_{p-1}}$) entsprechen,
- ausgehend von den p verwürfelten Angaben ($b'_{i_0}$,..., $b'_{i_{p-1}}$) durch multipartite abgesicherte Berechung zwischen jeder der p verwürfelten Angaben ($b'_{i_0}$, ...,$b'_{i_{p-1}}$) und der Angabe (b) des Individuums oder Gegenstands den oder die Indizes ($i_{ID}$) einer oder mehrerer verwürfelter Angaben ($b'_{i_{ID}}$) zu bestimmen, deren entsprechende Referenzangaben ($b_{i_{ID}}$) einen Ähnlichkeitsgrad mit der Angabe (b) des Individuums oder Gegenstands aufweisen, der einen vorbestimmten Grenzwert ($\eta$) überschreitet,

ohne dass der Kontrollserver (SC) Informationen über die in der Datenbank (DB) gespeicherten Referenzangaben ($b_0$...$b_{N-1}$) erhält oder der Verwaltungsserver (SG) Informationen über die Angabe (b) des zu identifizierenden Individuums (I) erhält.

**Claims**

1. An identification process of an individual or object (I), in a system comprising a control server (SC), adapted to acquire a datum (b) of the individual (I) or object to be identified, and a management server (SG) of a database (DB) comprising N indexed reference data ($b_i$) of N stored individuals, the datum (b) of the individual (I) and the reference data ($b_i$) being coded on n bits,

in which, to identify the individual or object (I), its datum (b) is compared to each of the N data ($b_i$) of the base to determine whether the datum (b) of the individual or object (I) to be identified corresponds to one of the N reference data ($b_i$) of the N stored individuals,

the process comprising a step during which the control server (SC) acquires (100) the datum (b) of the individual or object to be identified, and the process being **characterised in that** it also comprises steps during which:

- the control server (SC) and the management server (SG) convert (210) the reference data ($b_i$) of the base and the datum (b) of the individual or object (I) to be identified into simplifed data ($s_i$, s) of less size, the simplifed data ($s_i$, s) being coded on t bits, t being less than n,

- the control server (SC) determines (200) a set of p index ($i_0, ..., i_{p-1}$) of simplifed data ($s_{i_0}, ..., s_{i_{p-1}}$) of the base (DB), p being less than N, having the most similarities to the simplifed datum (s) of the individual or object (I) to be identified, securely between each of the N simplifed data ($s_i$) of the database (DB) and the simplifed datum (s) of the individual or object (I) to be identified, said set being determined by performing a method of secure multi-party calculation in which the management server (SG) generates (220) a garbled calculation circuit of a function to be evaluated,

  ∘ the garbled circuit having for inputs the set of encryption keys of the bits of simplifed data ($s_{i_0}, ..., s_{i_{p-1}}$) of the base (DB) and those of the simplifed datum (s) of the individual (I),

  ∘ the function to be evaluated being the calculation of the rates of similarities between the simplifed data ($s_{i_0}, ..., s_{i_{p-1}}$) of the base (DB) and the simplifed datum (s) of the individual (I) followed by a search step of the simplifed p data of the base having the most similarities to the simplifed datum (s) of the individual, the evaluation of the circuit allowing finding the index ($i_0, ..., i_{p-1}$) of the simplifed data ($s_{i_0}, ..., s_{i_{p-1}}$) having the most similarities to the simplifed datum (s) of the individual,

- the management server (SG) scrambles (320) the N reference data ($b_i$) of the database (DB), and transfers to the control server p scrambled data ($b'_{i_0}, ..., b'_{i_{p-1}}$) corresponding to the simplifed data ($s_{i_0}, ..., s_{i_{p-1}}$) identified previously,
- from the p scrambled data ($b'_{i_0}, ..., b'_{i_{p-1}}$) the control server (SC) determines (300), by secure multi-party computation between each of the p scrambled data ($b'_{i_0}, ..., b'_{i_{p-1}}$) and the datum (b) of the individual or object, the index or the indices ($i_{ID}$) of one or more scrambled data ($b'_{i_{ID}}$) whereof the corresponding reference data ($b_{i_{ID}}$) have a rate of similarity to the datum (b) of the individual or object, which exceeds a predetermined threshold ($\eta$).

2. The identification process according to the preceding claim, in which the transfer of p scrambled data ($b'_{i_0}, ..., b'_{i_{p-1}}$) from the management server (SG) to the control server (SC) uses an oblivious transfer technique.

3. The identification process according to claim 1, in which, after the control server (SC) has determined the index or the indices ($i_{ID}$) of the scrambled data ($b'_{i_{ID}}$) whereof the corresponding reference data ($b_{i_{ID}}$) have a rate of similarity to the datum (b) of the individual (I) or object which exceeds a predetermined threshold ($\eta$), the control server (SC) communicates (400) said index ($i_{ID}$) to the management server (SG), and from the index or indices ($i_{ID}$), the management server (SG) determines the reference datum or the reference data ($b_{i_{ID}}$) of the base corresponding to said index or said indices, and identifies the individual (i) or object as an individual or object stored in the base (DB) having the reference datum ($b_{i_{ID}}$) corresponding to the index or the indices ($i_{ID}$).

4. The identification process according to claim 1, in which, for scrambling the N data ($b_i$) of the base (DB), the management server (SG) generates, for each of the p reference data ($b_{i_j}$) corresponding to the simplifed data selected ($s_{i_j}$), a corresponding scrambled database ($DB^{ij}$) comprising N scrambled data ($b'_i$) for which, for each possible position (u) of a bit in the binary representation of the corresponding data ($b_i$), a random permutation $(\tau_u^{i_j})$ is applied to the bit of said position (u).

5. The identification process according to claim 1, in which the identification relates to an individual, and the reference data ($b_i$) of the base (DB) and the datum (b) of the individual (I) to be identified are biometric data.

6. The identification process according to claim 1, in which each datum (b, $b_i$) comprises a set of indexed bits, and in which, during the conversion step (210) of the data (b, $b_i$) into simplifed data (s, $s_i$), an indexation set (A) is defined comprising indexing numbers of the bits of data (b, $b_i$), and the data (b, $b_i$) is converted by keeping for the simplifed data (s, $s_i$) only the bits indexed by the numbers of the indexation set, said indexing numbers being selected to relate to the most pertinent bits.

7. The identification process according to the preceding claim, in which the determining of simplifed data ($s_i$) of the base (DB) having the most similarities to the simplifed datum (s) of the individual (I) or object is peformed by computation of Hamming distances between the simplifed data ($s_i$) of the base (DB) and the simplifed datum (s) of the individual.

8. The identification process according to claim 1, in which the determination step of N simplifed data ($s_i$) of the base (DB) having the most similarities to the simplifed datum (s) of the individual (I) to be identified is performed by secure multi-party computation.

9. The identification process according to any one of the preceding claims, in which, during the step of secure multi-party computation between the scrambled data ($b'_{i_0}$, ...,$b'_{i_{p-1}}$) of the base (DB) and the datum (b) of the individual,

   - a rate of similarity between each datum of the base ($b_{i_0}$ ,..., $b_{i_{p-1}}$) corresponding to each scrambled datum ($b'_{i_0}$, ..., $b'_{i_{p-1}}$) and the datum of the individual (b) is calculated,
   - the rate of similarity obtained is compared to the predetermined threshold ($\eta$) to select the index or the indices of the datum or the data of the base (DB) having a rate of similarity exceeding said threshold ($\eta$).

10. The process according to any one of the preceding claims, in which each step of secure multi-party computation comprises the following sub-steps:

   - the management server (SG) generates at least one garbled circuit (C) for computation of a function (f) to be evaluated,

   each garbled circuit (C) having for inputs a set of encryption keys of bits of input data of the function (f) to be evaluated and for output the encryption keys corresponding to the bits of the result of the evaluated function (f), and comprising:

   o the computation steps of the function (f) decomposed in the form of elementary logical operations, and
   o a set of coding keys (k) of each of the possible inputs and outputs of each elementary logical operation,
   - the management server (SG) randomly generates said coding keys (k),
   - the management server (SG) communicates to the control server (SC), using an oblivious transfer technique, for each garbled circuit (C),

     ∘ coding keys (k) corresponding to the values of the bits of the inputs of the function (f) to be evaluated, and
     ∘ a decoding table (T) of the output of each garbled circuit (C) or of one or more outputs of a logical operation of the latter, and

   - from the keys (k) obtained, the control server (SC) evaluates each garbled circuit (C) using the keys obtained as input.

11. The identification process according to the preceding claim, in which, to compute and compare the rate of similarity between the data ($b_{i_0}$, ..., $b_{i_{p-1}}$) corresponding to the scrambled data ($b'_{i_0}$,..., $b'_{i_{p-1}}$) and the datum (b) of the individual, a secure multi-party computation is made, in which for each of the data of the selected base the management server (SG) generates (310) a corresponding garbled circuit,

   - the inputs of each garbled circuit ($C_0$... $C_{p-1}$) being encryption keys of the corresponding scrambled datum ($b'_{i_0}$, ..., $b'_{i_{p-1}}$) and those of the datum (b) of the individual (I),
   - the function (f) to be evaluated of each garbled circuit being the calculation of the rate of similarity between the datum of the corresponding base ($b_{i_0}$, ...,$b_{i_{p-1}}$) and the datum (b) of the individual, and comparison of the rate of similarity to the predetermined threshold ($\eta$), and
   - the output of each circuit ($C_0$... $C_{p-1}$) being the result of comparison of the rate of similarity to the predetermined threshold ($\eta$),

   in which the management server (SG) generates and transfers to the control server (SC), for each garbled circuit ($C_0$... $C_{p-1}$), scrambled coding keys (k') corresponding to the possible values of the bits of the scrambled datum ($b'_{i_0}$, ..., $b'_{i_{p-1}}$) and coding keys (k) corresponding to the possible values of the bits of the datum (b) of the individual, and transfers to the control server (SC) the values of the bits of the scrambled datum, and in which the transfers of the values of the bits of the scrambled datum and the corresponding coding keys execute an oblivious transfer method.

12. The identification process according to the preceding claim, in which the function (f) to be evaluated of each garbled circuit ($C_0$... $C_{p-1}$) comprises calculation of the normalized Hamming distance between each datum ($b_{i_0}$, ...,$b_{i_{p-1}}$) corresponding to the scrambled datum ($b'_{i_0}$, ...,$b'_{i_{p-1}}$) and the datum (b) of the individual (I).

13. The identification process according to one of claims 10 or 11 in combination with claim 4, in which the generation of the coding keys (k') of a scrambled datum ($b'_{ij}$) is performed by applying to coding keys (k) generated randomly for each bit of the datum ($b_{ij}$) corresponding of the base reindexation following the same permutation ($\tau_u^{i_j}$) as that applied to said bit of the datum ($b_{ij}$) to obtain the scrambled datum ($b'_{ij}$).

14. The identification process according to claim 1, comprising a preliminary step (10) during which the data ($b_0$... $b_{N-1}$) of the base (DB) are reindexed randomly by the management server (SG).

**15.** An identification system of an individual, comprising at least one control server (SC) of an individual (I) to be identified, and at least one management server (SG) of a base (DB) of N reference data ($b_0...b_{N-1}$) of stored individuals,

the control server (SC) being adapted to proceed with acquisition of a datum (b) of the individual (I),

the system being **characterised in that** the control server (SC) and the management server (SG) comprise processing means adapted for:

- converting (210) the reference data ($b_i$) of the base and the datum (b) of the individual or the object (I) to be identified into simplifed data ($s_i$, s) of less size,
- determining (200) a set of p index ($i_0,...,i_{p-1}$) of simplifed data ($s_{i_0}, ..., s_{i_{p-1}}$) of the base (DB), p being less than N, having the most similarities to the simplifed datum (s) of the individual or the object (I) to be identified, securely between each of the N simplifed data ($s_i$) of the database (DB) and the simplifed datum (s) of the individual or the object (I) to be identified, said set being determined by implementing a method of secure multi-party computation in which the management server (SG) generates (220) a garbled calculation circuit of a function to be evaluated,

    ◦ the garbled circuit having for inputs the set of encryption keys of the bits of simplifed data ($s_{i_0}, ...,s_{i_{p-1}}$) of the base (DB) and those of the simplifed datum (s) of the individual (I),
    ◦ the function to be evaluated being calculation of the rates of similarities between the simplifed data ($s_{i_0},...,s_{i_{p-1}}$) of the base (DB) and the simplifed datum (s) of the individual (I) followed by a search step of p simplifed data of the base having the most similarities to the simplifed datum (s) of the individual, the evaluation of the circuit finding the index ($i_0,...,i_{p-1}$) of the simplifed data ($s_{i_0}, ..., s_{i_{p-1}}$) having the most similarities to the simplifed datum (s) of the individual,

- scrambling (320) the N reference data ($b_i$) of the database (DB), and transferring p scrambled data ($b'_{i_0}, ...,b'_{i_{p-1}}$) corresponding to the simplifed data ($s_{i_0}, ...,s_{i_{p-1}}$) identified previously,
- from p scrambled data ($b'_{i_0}, ...,b'_{i_{p-1}}$), determining (300), by secure multi-party computation between each of the p scrambled data ($b'_{i_0}, ..., b'_{i_{p-1}}$) and the datum (b) of the individual or object, the index or the indices ($i_{ID}$) of one or more scrambled data ($b'_{i_{ID}}$) whereof the corresponding reference data ($b_{i_{ID}}$) have a rate of similarity to the datum (b) of the individual or object which exceeds a predetermined threshold ($\eta$).

without the control server (SC) obtaining any information on the reference data ($b_0...b_{N-1}$) stored in the database (DB), or the management server (SG) obtaining any information on the datum (b) of the individual (I) to be identified.

I

b, (m)

Serveur de
contrôle SC

b, (m)

Serveur de
gestion SG

DB
$b_0, ..., b_{N-1}$
$(m_0, ..., m_{N-1})$

Figure 1

| Reindexation des données de la base | — 10 |

| Acquisition de donnée b | — 100 |

**Filtrage rapide**

| Simplification des données | — 210 |
| Création d'un circuit confus | — 220 |
| Evaluation du circuit confus | — 230 |

— 200

**Comparaison & sélection**

| Génération de k circuits confus | — 310 |
| Brouillage des données | — 320 |
| Evaluation des k circuits | — 330 |

— 300

| Transfert d'index au serveur de gestion | — 400 |

Figure 2

Figure 3a

| x | y | z |
|---|---|---|
| 0 | 0 | 0 |
| 0 | 1 | 0 |
| 1 | 0 | 0 |
| 1 | 1 | 1 |

Figure 3b

| x | y | z |
|---|---|---|
| $k_0^x$ | $k_0^y$ | $k_0^z$ |
| $k_0^x$ | $k_1^y$ | $k_0^z$ |
| $k_1^x$ | $k_0^y$ | $k_0^z$ |
| $k_1^x$ | $k_1^y$ | $k_1^z$ |

Figure 3c

| x | y | z |
|---|---|---|
| $k_0^x$ | $k_0^y$ | $Enc_{k_0^x, k_0^y}(k_0^z)$ |
| $k_0^x$ | $k_1^y$ | $Enc_{k_0^x, k_1^y}(k_0^z)$ |
| $k_1^x$ | $k_0^y$ | $Enc_{k_1^x, k_0^y}(k_0^z)$ |
| $k_1^x$ | $k_1^y$ | $Enc_{k_1^x, k_1^y}(k_1^z)$ |

Figure 3d

| |
|---|
| $Enc_{k_1^x, k_1^y}(k_1^z)$ |
| $Enc_{k_0^x, k_0^y}(k_0^z)$ |
| $Enc_{k_1^x, k_0^y}(k_0^z)$ |
| $Enc_{k_0^x, k_1^y}(k_0^z)$ |

Figure 3e

## FIG. 4a

X'

## FIG. 4b

MUX'

## FIG. 4c

$D_0$  $D_1$

>

MUX'

$Z_0$  $Z_1$

**2-1**

## FIG. 4d

$D_0$  $D_1$    $D_2$  $D_3$        $D_{N-4}$ $D_{N-3}$    $D_{N-2}$ $D_{N-1}$

**2-1**    **2-1**        **2-1**        **2-1**

**2-1**            **2-1**

**2-1**

$D'_0$            $D'_1$ $D_{min}$            $D'_2$            $D'_3$ $\cdots$ $D'_{N-2}$

**N-to-1 MIN**

**Serveur de contrôle SC**

$b$, $(m)$, $s$

$\{i_0, ..., i_{p-1}\}$

Transfert inconscient
$k(s)$

$C(f)$, $T$,
$k(s_{0)}...k(s_{N-1})$

**Serveur de gestion SG**

$s_0, ..., s_{N-1}$
$C(f)$, $T$,
$k(s)$, $k(s_0)...(s_{N-1})$

**DB**

$b_0, ..., b_{N-1}$
$(m_0, ..., m_{N-1})$

Figure 5

Serveur de
contrôle SC

b, (m)

$\{i\} \mid f(b,b_i) < \varepsilon$

Transfert inconscient
$b'i_0,...,b'i_{p-1}$
$k'(b'_{i_o}...b'_{i_{p-1}})$

Serveur de
gestion SG

$b'_0,...,b'_{N-1}$
$C_0(f)...C_{p-1}(f),$
$T_1...T_p,$
$k(b), k(b_{i0})...k(b_{ip-1})$

DB
$b_0,...,b_{N-1}$
$(m_0,...,m_{N-1})$

$C_0(f)...C_{p-1}(f),$
$T_1...T_p, k(b)$

Figure 6

## RÉFÉRENCES CITÉES DANS LA DESCRIPTION

**Littérature non-brevet citée dans la description**

- **Z. ERKIN ; M. FRANZ ; J. GUAJARDO ; S. KATZENBEISSER ; I. LAGENDIJK ; T. TOFT.** Privacy-preserving face récognition. *In Privacy Enhancing Technologies,* 2009
- **A. C.-C. YAO.** How to generate and exchange secrets. *In FOCS,* 1986
- **A.-R. SADEGHI ; T. SCHNEIDER ; I. WEHRENBERG.** Efficient privacy-preserving face récognition. *In ICISC,* 2009
- Extended Private Information Retrieval and Its Application in Biometrics Authentications. **J. BRINGER et al.** In Cryptology and Network Security. Springer, 08 Décembre 2007
- **M. BLANTON et al.** Secure and Efficient Protocols for Iris and Fingerprint Identification. *In International association for cryptologic research,* 17 Septembre 2011, vol. 20110917, 1-25
- **F. HAO ; J. DAUGMAN ; P. ZIELINSKI.** A fast search algorithm for a large fuzzy database. *IEEE Transactions on Information Forensics and Security,* 2008, vol. 3 (2
- **J. DAUGMAN.** How Iris Récognition Works. *IEEE transactions on circuits and systems for video technology,* Janvier 2004, vol. 14 (1